# EUROPÄISCHE PATENTSCHRIFT

(11) **EP 3 197 935 B1**
(45) Veröffentlichungstag und Bekanntmachung des Hinweises auf die Patenterteilung: **28.11.2018**
(21) Anmeldenummer: 15766494.7
(22) Anmeldetag: 21.09.2015
(51) Int. Cl.: C08G 64/02, C08G 64/34, C08G 64/42, C08G 18/44, C08G 18/50

(54) **FEUCHTIGKEITSHÄRTENDE POLYETHERCARBONATE ENTHALTEND ALKOXYSILYL-GRUPPEN**
MOISTURE-CURABLE ALKOXYSILYL GROUPS CONTAINING POLYETHER CARBONATES
CARBONATE DE POLYÉTHER DURCISSANT AU CONTACT DE L'HUMIDITÉ COMPRENANT DES GROUPES ALKOXYSILYLES

(30) Priorität: 23.09.2014 EP 14185896
(43) Veröffentlichungstag der Anmeldung: 02.08.2017
(73) Patentinhaber: Covestro Deutschland AG, 51373 Leverkusen (DE)
(72) Erfinder: MÜLLER, Thomas Ernst, 52074 Aachen (DE); GÜRTLER, Christoph, 50735 Köln (DE); SUBHANI, Muhammad Afzal, 52066 Aachen (DE); KOEHLER, Burkhard, 34289 Zierenberg (DE)
(74) Vertreter: Levpat
(86) Internationale Anmeldenummer: PCT/EP2015/071556
(87) Internationale Veröffentlichungsnummer: WO 2016/046110

(56) Entgegenhaltungen:
- EP-A1- 2 093 244
- EP-A1- 2 725 044
- US-A- 6 100 367

## Beschreibung

Die vorliegende Erfindung betrifft ein Verfahren zur Herstellung von Polyethercarbonaten enthaltend Alkoxysilyl-Gruppen, die Herstellung eines Polyurethan-Polymers unter Verwendung eines solchen Polyethercarbonats, ein vernetztes, Siloxangruppen-enthaltendes Polymer sowie einen Formkörper, der ein solches vernetztes Polymer enthält oder daraus besteht.

Moderne Kunststoffe sollen neben einer maßgeschneiderten Funktionalität auch verstärkt ökologischen Gesichtspunkten Rechnung tragen. Dies kann, neben einer allgemeinen Optimierung von Herstellprozessen, auch durch den Einsatz von Treibhausgasen, wie Kohlendioxid, als Synthesebausteine zum Aufbau von Polymeren erreicht werden. So lässt sich zum Beispiel über die Fixierung von Kohlendioxid insgesamt eine bessere Prozess-Umweltbilanz erhalten. Dieser Weg wird im Bereich der Herstellung von Polyethercarbonaten beschritten und bildet seit mehr als 40 Jahren Stand intensiver Forschung (z. B. Inoue et al, Copolymerization of Carbon Dioxide and Alkylenoxide with Organometallic Compounds; Die Makromolekulare Chemie 130, 210-220, 1969). In einer möglichen Herstellungsvariante werden dabei Polyethercarbonate durch eine katalytische Umsetzung von Epoxiden und Kohlendioxid in Anwesenheit H-funktioneller Starterverbindungen ("Starter") erhalten. Eine allgemeine Reaktionsgleichung hierfür ist in Schema (I) gegeben:

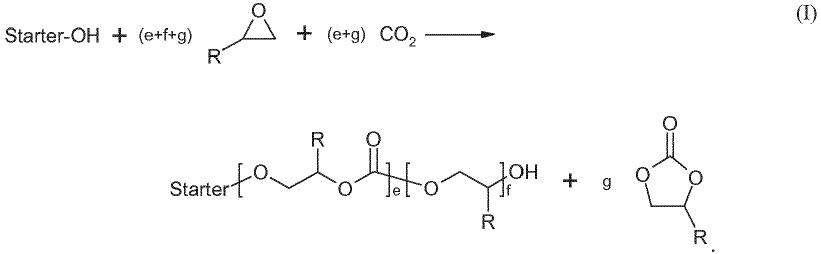

Als weiteres Produkt, hier ein unerwünschtes Nebenprodukt, entsteht neben dem Polyethercarbonat ein cyclisches Carbonat (beispielsweise für R = CH₃ Propylencarbonat).

Um spezifisch funktionalisierte Polyethercarbonate für die Lack-, Duromer- oder Elastomer-Chemie zugänglich zu machen ist die Einführung reaktiver, insbesondere vernetzbarer Gruppen am Polymergerüst wünschenswert. Besonders günstig sind hierbei Alkoxysilyl-Gruppen, da sie unter dem Einfluss von Feuchtigkeit vernetzbar sind.

In der Literatur beschreibt beispielsweise Macromolecules (2011) 44, 9882-9886 die Addition von Mercaptoethanol an Polyethercarbonate enthaltend Vinylcyclohexenoxid als Comonomer (thiolene-click Chemie). Diese Reaktion wurde genutzt, um Polyethercarbonate lateral mit Hydroxylgruppen zu funktionalisieren. Die Einführung anderer funktioneller Gruppen durch diese Reaktion wird nicht genannt.

Die WO 2012136657 A1 beschreibt ein Verfahren zur Copolymerisation von Kohlendioxid und mindestens einem Epoxid in Gegenwart mindestens eines Doppelmetallcyanid-Katalysators (DMC-Katalysator), wobei das/die zur Polymerisation vorgesehenen Epoxid(e) in einem Druckbehälter bei einer Temperatur von 0 bis 40°C solange mit Kohlendioxid beaufschlagt wird/werden, bis sich ein konstanter Druck einstellt, wobei der Druck des zugeführten Kohlendioxids im Bereich von 1 bis 500 bar liegt, und anschließend die Copolymerisation des so erhaltenen Gemisches gestartet wird. Die Herstellung Polyethercarbonate enthaltend Alkoxysilyl-Gruppen durch Copolymerisation von CO₂, Epoxiden und Epoxiden enthaltend Alkoxysilyl-Gruppen ist ebenfalls genannt, allerdings wird das Alkoxysilyl-Gruppen enthaltende Monomer als reaktives Additiv genutzt, um die Einbaurate von CO₂ in das Polymer zu erhöhen. Eine Vernetzung der resultierenden Polyethercarbonate wird nicht beschrieben. Diese Vorgehensweise wird zum Teil als nachteilig empfunden, weil die vernetzungsaktive Alkoxysilyl-Gruppe schon während der Herstellung des Polyethercarbonats zugegen ist, wodurch die Gefahr einer Vernetzung des Polymers schon während der Synthese oder Aufarbeitung besteht. Insbesondere können bei den hohen Polymerisationstemperaturen die OH-Endgruppen der OH-funktionellen Starterverbindungen oder des gebildeten Polymers mit den Alkyl-O-Si- oder Aryl-O-Si-Einheiten unter Umetherung reagieren.

Die EP 2 725 044 A1 beschreibt ein Alkoxysilanterminiertes Präpolymer sowie das Verfahren zur Herstellung dieses Präpolymers, durch die Umsetzung von Polyolen mit Polyisocyanaten sowie eines Alkoxysilans. Hierbei wird das Polyol in der 1. Verfahrensstufe zunächst durch Anlagerung von CO₂ und Alkylenoxiden an H-funktionelle Starterverbindungen erhalten. Anschließend erfolgt die Umsetzung mit Polyisocyanaten zu Polyurethanpräpolymeren, welche abschließend mit Alkoxysilanen umgesetzt werden, welche wenigstens eine Isocyanat und/oder Isocyanatreaktive Gruppe aufweisen. Die Beispiele betreffen die Umsetzung eines Polyethercarbonatdiols mit Hexamethylendiisocyanat, das in einem weiteren Schritt mit [(Cyclohexylamino)methyl]-triethoxysilan umgesetzt wird. Das resultierende funktionalisierte Präpolymer ist hierbei durch genau zwei Alkoxysilan-Gruppen terminiert, wodurch ein hoher Abstand zwischen Vernetzungspunkten in der nachfolgenden Umsetzung mit Glycerin oder Carboxymethylcellulose resultiert. Aus dem NCO-Gehalt der Präpolymere (1,82 bis 3,7 %) resultiert ein Anteil an Triethoxysilan-Gruppen von 6,5 bis 12,1 Gew.-% im resultierenden Alkoxysilanterminierten Präpolymer. Für viele Anwendungen wäre es wünschenswert, den Anteil an Alkoxysilan-Gruppen bei der Einführung der Alkoxysilan-Gruppen einstellen zu können.

Die EP 2 093 244 A1 offenbart ein Verfahren zur Herstellung von Alkoxysilylgruppen tragenden Polyetheralkoholen sowie die resultierenden Polyetheralkohole. Dabei erfolgt eine DMCkatalysierte Umsetzung von Propylenoxid an Monoole in Gegenwart von Oxyalkylensilan-haltigen Epoxiden wie beispielsweise 3-Glycidyloxypropyltrimethoxysilan (GLYEO). Die resultierenden Monoalkohole sind durch eine Blockcopolymer-Struktur bestehend aus einem GLYEOenthaltendem Block sowie einem Polypropylenglykolblock charakterisiert. Das erhaltene Polymer ist auf Grund der gleichzeitigen Anwesenheit von Alkoholgruppen und Alkoxysilylgruppen nicht lagerstabil und vernetzt innerhalb kurzer Zeit. Beispiel 3 beschreibt die Verwendung von Kohlendioxid als Comonomer, jedoch wird nur ein geringer Carbonatgehalt von ca. 4 Gew.-% erzielt.

Die US 6 100 367 beschreibt ein Verfahren zur Herstellung eines modifizierten Polymers durch Reaktion eines ungesättigten Polycarbonats mit einem Alkoxysilan in Gegenwart eines Hydrosilylierungskatalysators. Die Verwendung von Polyethercarbonatpolyolen als ungesättigtes Polycarbonat wird nicht beschrieben.

Die Aufgabe der vorliegenden Erfindung bestand darin, ein Verfahren zur Herstellung von Alkoxysilyl-Gruppen enthaltenden Polyethercarbonaten bereitzustellen, welches eine nachträgliche Funktionalisierung der Polyethercarbonate erlaubt, um diese zum Beispiel anschließend einer kontrollierbaren Vernetzungsreaktion zugänglich zu machen.

Diese Aufgabe wird erfindungsgemäß gelöst durch ein Verfahren zur Herstellung von Polyethercarbonaten enthaltend Alkoxysilyl-Gruppen, bei dem
(a) ein ungesättigtes Polyethercarbonatpolyol mit
(b) einer Alkoxysilan-Verbindung der Formel (II)

Si(X)ₘ(R1)ₙ(R2)ₒ (II)

zur Reaktion gebracht wird, wobei

X = H, Y-S-H und Y = C1-C22 Alkylen, C6-C14 Arylen, C7-C14 Aralkylen, C7-C14 Alkylarylen; R1 = C1-C8-Alkoxy, C7-C20-Aralkoxy, C6-C14-Aroxy, C7-C20-Alkylaroxy; R2 = C1-C22 Alkyl, C6-C14 Aryl, C7-C14 Aralkyl, C7-C14 Alkylaryl und m und n unabhängig voneinander eine ganze Zahl ≥ 1, o null oder eine ganze Zahl ≥ 1 und m + n + o = 4 ist.

Durch die erfindungsgemäße Zugabe einer Alkoxysilan-Verbindung zu einem bereits mit zumindest einer Doppelbindung funktionalisierten Polyethercarbonat wird eine effiziente und selektive Verfahrensführung ermöglicht. Im Gegensatz zu einer *in situ* Einpolymerisation von Verbindungen enthaltend Alkoxysilyl-Gruppen schon im Rahmen der Terpolymerisation zur Herstellung des Polyethercarbonats, zum Beispiel durch die Zugabe epoxyfunktioneller Silane, lässt sich durch das erfindungsgemäße Verfahren die stöchiometrische Zusammensetzung und der Aufbau des Polymers deutlich besser steuern. So entgeht man durch die erfindungsgemäße Syntheseführung der Gefahr einer vorzeitigen Vernetzung des Polymers schon während der Synthese oder Aufarbeitung. Insbesondere könnten ansonsten bei den hohen Polymerisationstemperaturen die OH-Endgruppen der OH-funktionellen Starterverbindungen oder des gebildeten Polymers mit den Alkoxysilyl-Gruppen unter Umetherung reagieren. Des Weiteren kann der im Stand der Technik zwingend erforderliche Einsatz epoxyfunktioneller Silane die Reaktionsgeschwindigkeiten und/oder die Menge des eingebauten CO₂ in für die angedachte Applikation der Polymere unerwünschter Weise beeinflussen. Die erfindungsgemäße Syntheseführung mit nachgelagerter Alkoxysilyl-Funktionalisierung führt hingegen zu einer deutlich größeren Anzahl an Verfahrens-Freiheitsgraden.

Die vorliegende Erfindung wird nachfolgend im Zusammenhang mit einzelnen Ausführungsformen und weiteren Aspekten näher erläutert. Sie können beliebig miteinander kombiniert werden, sofern sich aus dem Zusammenhang nicht eindeutig das Gegenteil ergibt.

Nach einer Ausgestaltung des erfindungsgemäßen Verfahrens erfolgt die Herstellung des ungesättigten Polyethercarbonatpolyols in der Weise, dass zunächst eine H-funktionelle Starterverbindung und ein Katalysator vorgelegt und anschließend mit Kohlendioxid, mindestens einem Alkylenoxid und mindestens einem ungesättigten Comonomer ausgewählt aus der Gruppe der ungesättigten Alkylenoxide und ungesättigten cyclischen Anhydride organischer Säuren umgesetzt wird. Mit anderen Worten kann dieser Verfahrensschritt dem erfindungsgemäßen Verfahren vorangestellt werden, um das ungesättigte Polyethercarbonatpolyol zu erzeugen. Das erfindungsgemäße Verfahren ist also nicht auf diesen Weg der Erzeugung des ungesättigten Polyethercarbonatpolyols limitiert.

Dabei kann im Rahmen der Synthese des ungesättigten Polyethercarbonatpolyols als Katalysator beispielsweise ein Doppelmetallcyanid-Katalysator verwendet werden. Katalysatoren dieses Typs und deren Herstellung werden im Folgenden noch näher beschrieben.

Bei der Erzeugung des ungesättigten Polyethercarbonatpolyols kann der Anteil an ungesättigten Comonomeren beispielsweise ≥ 0,1 bis ≤ 50 mol-% bezogen auf die Gesamtstoffmenge aus Kohlendioxid, Alkylenoxid und Comonomeren betragen, insbesondere ≥ 0,2 bis ≤ 40 mol-% und ganz besonders bevorzugt ≥ 0,5 bis ≤ 15 mol-%.

In bevorzugter Ausgestaltung des erfindungsgemäßen Verfahrens ist bei der Alkoxysilan-Verbindung der Formel (II) m = 1. Dies ist besonders vorteilhaft, weil hierdurch die Alkoxysilan-Verbindung im Wesentlichen eine gegenüber den Doppelbindungen des ungesättigten Polyethercarbonatpolyols reaktive Gruppe trägt und dadurch eine Kettenverlängerung oder gar Vernetzung des ungesättigten Polyethercarbonatpolyols während dieser Reaktion der Alkoxysilan-Funktionalisierung weitgehend unterbunden werden kann.

Im Rahmen des erfindungsgemäßen Verfahrens kann ferner vorgesehen sein, dass bei der Umsetzung des ungesättigten Polyethercarbonatpolyols mit der Alkoxysilan-Verbindung der Formel (II) in der X = Y-S-H ist, eine Verbindung ausgewählt aus der Gruppe der Photoinitiatoren, Peroxide, Azoverbindungen, metallaktivierten Peroxide und/oder Redoxinitiatoren hinzugegeben wird.

Nach einer alternativen bevorzugten Ausgestaltung des erfindungsgemäßen Verfahrens kann ferner vorgesehen sein, dass bei der Umsetzung des ungesättigten Polyethercarbonatpolyols mit der Alkoxysilan-Verbindung der Formel (II) in der X = H ist, ein Hydrosilylierungskatalysator aus der Gruppe der Karstedt- oder Speier-Katalysatoren, elementares Platin, elementares Platin auf einem Träger aus Aktivkohle oder Aluminiumoxid, oder Mischungen hiervon hinzugegeben wird.

Nach einer bevorzugten Ausführungsform des erfindungsgemäßen Verfahrens werden die OH-Gruppen des ungesättigten Polyethercarbonatpolyols vor der Umsetzung des ungesättigten Polyethercarbonatpolyols mit der Alkoxysilan-Verbindung der Formel (II) mit einem Schutzreagens unter Einführung von Schutzgruppen umgesetzt, wobei das Schutzreagens insbesondere ausgewählt ist aus der Gruppe umfassend, Trimethyloxonium-tetrafluoroborat, Methylmesylat, Methyltosylat, Dimethylsulfat, Methyltriflat, Diazomethan, Essigsäureanhydrid, Chloracetylanhydrid, Trifluoracetylanhydrid, *N*,*O*-bis(trimethylsilyl)acetamid, Hexamethyldisilazan im äquimolaren Gemisch mit Chlortrimethylsilan oder mit Chlortrimethylsilan im molaren Überschuss, Chlortrimethylsilan, Trimethylsilyltriflat, Tritylchlorid, o-Nitrobenzylchlorid, Tosylchlorid, Mesylchlorid, Tetrahydropyran und Isobuten. Dies ist von Vorteil, weil auf diese Weise die OH-Funktionalität des ungesättigten Polyethercarbonatpolyols teilweise oder auch vollständig - bei quantitativer Umsetzung der OH-Gruppen mit dem Schutzreagens - erhalten werden kann, indem durch das Schutzreagens eine Reaktion der OH-Gruppen mit der Alkoxysilan-Verbindung der Formel (II) unterbunden wird. Der Einsatz von Hexamethyldisilazan im Gemisch mit Chlortrimethylsilan ist besonders reaktiv und deshalb bevorzugt. Hexamethyldisilazan wird mit einer zumindest äquimolaren Menge an Chlortrimethylsilan verwendet, damit kein Ammoniak als Abgangsgruppe abgespalten wird, das das Polymer zerstören könnte. Demgegenüber ist das sich in äquimolarer Einsatzmenge bildende Ammoniumchlorid oder der bei Chlortrimethylsilan-Überschuss zusätzlich freiwerdende Chlorwasserstoff für das Polymer unschädlich.

Nach der Umsetzung des ungesättigten Polyethercarbonatpolyols mit der Alkoxysilan-Verbindung der Formel (II) kann die Schutzgruppe optional teilweise oder vollständig wieder entfernt und dabei ein Polyethercarbonatpolyol enthaltend Alkoxysilyl-Gruppen erhalten werden.

Ein weiterer Gegenstand der vorliegenden Erfindung betrifft ein Verfahren zur Herstellung eines Polyurethan-Polymers enthaltend Alkoxysilyl-Gruppen, wobei das Verfahren dadurch gekennzeichnet ist, dass ein Polyethercarbonatpolyol enthaltend Alkoxysilyl-Gruppen herstellbar gemäß der vorliegenden Erfindung mit einer Polyisocyanat-Verbindung umgesetzt wird, wobei die Menge an eingesetzter Polyisocyanat-Verbindung insbesondere in der Weise gewählt wird, dass das molare Verhältnis ihrer Isocyanatgruppen zu den Hydroxylgruppen des Polyethercarbonatpolyols enthaltend Alkoxysilyl-Gruppen kleiner als 1 : 1 ist. Bevorzugt wird die Menge an eingesetzter Polyisocyanat-Verbindung in der Weise gewählt wird, dass das molare Verhältnis ihrer Isocyanatgruppen zu den Hydroxylgruppen des Polyethercarbonatpolyols enthaltend Alkoxysilyl-Gruppen 0,9 : 1 oder kleiner ist, weiter bevorzugt 0,85 : 1 oder kleiner.

Ein weiterer Gegenstand der vorliegenden Erfindung betrifft ein Polyethercarbonat enthaltend Alkoxysilyl-Gruppen oder ein Polyethercarbonatpolyol enthaltend Alkoxysilyl-Gruppen, erhältlich nach einem erfindungsgemäßen Verfahren.

Ein weiterer Gegenstand der vorliegenden Erfindung betrifft ein Polyurethan-Polymer enthaltend Alkoxysilyl-Gruppen, erhältlich nach einem erfindungsgemäßen Verfahren.

Bei dem erfindungsgemäßen Verfahren kann ferner
- das Polyethercarbonat enthaltend Alkoxysilyl-Gruppen,
- das Polyethercarbonatpolyol enthaltend Alkoxysilyl-Gruppen,
- eine Mischung aus Polyethercarbonat enthaltend Alkoxysilyl-Gruppen und Polyethercarbonatpolyol enthaltend Alkoxysilyl-Gruppen oder
- das Polyurethan-Polymer enthaltend Alkoxysilyl-Gruppen
vernetzt werden, insbesondere durch Zugabe von Wasser.

Ein weiterer Gegenstand der vorliegenden Erfindung betrifft ein vernetztes, Siloxangruppen-enthaltendes Polymer, erhältlich nach einem Verfahren wie vorstehend ausgeführt.

Die Erfindung betrifft weiterhin die Verwendung eines Polyethercarbonats enthaltend Alkoxysilyl-Gruppen, eines Polyethercarbonatpolyols enthaltend Alkoxysilyl-Gruppen oder eines Polyurethan-Polymers enthaltend Alkoxysilyl-Gruppen gemäß der vorliegenden Erfindung als Haftvermittler, Füllstoffaktivator oder in Kleb- und Dichtstoffen, wobei der Haftvermittler, der Füllstoffaktivator und der Kleb- und Dichtstoff insbesondere kieselsäurehaltige Füllstoffe enthält.

Die Erfindung betrifft weiterhin die Verwendung eines Polyethercarbonats enthaltend Alkoxysilyl-Gruppen oder eines Polyethercarbonatpolyols enthaltend Alkoxysilyl-Gruppen gemäß der vorliegenden Erfindung als Haftvermittler, Füllstoffaktivator oder in Kleb- und Dichtstoffen, wobei der Haftvermittler, der Füllstoffaktivator und der Kleb- und Dichtstoff insbesondere kieselsäurehaltige Füllstoffe enthält.

Die Erfindung betrifft weiterhin die Verwendung eines Polyurethan-Polymers enthaltend Alkoxysilyl-Gruppen gemäß der vorliegenden Erfindung als Haftvermittler, Füllstoffaktivator oder in Kleb- und Dichtstoffen, wobei der Haftvermittler, der Füllstoffaktivator und der Kleb- und Dichtstoff insbesondere kieselsäurehaltige Füllstoffe enthält.

Ein weiterer Gegenstand der vorliegenden Erfindung betrifft die Verwendung eines vernetzten, Siloxangruppen-enthaltenden Polymers gemäß der vorliegenden Erfindung als Beschichtungsmittel, Schaum, Dichtmasse, thermoplastischer Kunststoff, duromerer Kunststoff oder Elastomer, wobei das Beschichtungsmittel, der Schaum, die Dichtmasse, der thermoplastische Kunststoff, der duromere Kunststoff oder das Elastomer insbesondere kieselsäurehaltige Füllstoffe enthält.

Die Erfindung betrifft zudem einen Formkörper, der ein vernetztes, Siloxangruppen-enthaltendes Polymer gemäß der vorliegenden Erfindung enthält oder daraus besteht.

Die vorgenannten Ausführungsformen und Gegenstände werden im Folgenden auch anhand weiterer Ausführungsformen weiter beschrieben, Diese können beliebig miteinander kombiniert werden, sofern sich aus dem Zusammenhang nicht eindeutig das Gegenteil ergibt.

Bevorzugt werden vor der Umsetzung der ungesättigten Gruppen mit Alkoxysilan-Verbindungen die terminalen OH-Gruppen der Polyethercarbonate zu einer chemischen Gruppe umgesetzt, die nicht mit Si-O-Alkyl, Si-O-Aralkyl, Si-O-Aryl oder Si-O-Alkylaryl Gruppen reagiert. Die dazu gebräuchlichen Methoden sind dem Fachmann bekannt. Beispielsweise kann dies durch Umsetzung der OH-Gruppen mit Trialkylsilylderivaten, Dialkylvinylsilylderivaten, Alkyldivinylsilylderivaten, oder Triarylsilylderivaten unter Abspaltung der Abgangsgruppe erfolgen. Geeignete Trialkylsilylderivate sind *N*,*O*-Trialkylsilylacetamid, Trialkylsilylchlorid, Trialkylsilylbromid, Hexaalkyldisilazane im Gemisch mit Trialkylsilylhalogeniden, Bistrialkylsilyl-harnstoff, *N*-Trialkylsilyl-*N*-methyl-trifluoracetamid, Trialkylsilyltriflat, Trialkylsilylimidazol oder Bistrialkylsilyltrifluoracetamid. Statt der Trialkylsilylderivate können auch bezüglich der Reste am Siliciumatom gemischte oder reine Alkyl-, Vinyl- und Arylsilylderivate verwendet werden. Eine alternative Methode ist die Umsetzung der OH-Gruppen mit Alkylierungsreagenzien, wie beispielsweise Trimethyloxonium-Salzen, Methylhalogeniden, Methylsulfonaten, wie Methylmesylat, Methyltosylat, Methyltriflat, Dimethylsulfat, Diazomethan, Benzylchlorid, o-Nitrobenzylchlorid, Benzylmesylat, Benzyltosylat und Phenyldiazomethan. Eine weitere Methode ist die Umsetzung der OH-Gruppen mit Acylierungsreagentien, wie z.B. Carbonsäureanhydriden, wie Acetanhydrid, Trichloracetanhydrid, Trifluoracetanhydrid oder Benzoesäureanhydrid, Carbonsäurehalogeniden, wie Acetylchlorid, Chloracetylchlorid, Trichloracetylchlorid oder Trifluoracetylchlorid, Kohlensäurehalbesterhalogeniden, wie Benzylchloroformiat oder Kohlensäurehalbesteranhydriden, wie Di-tert-butyl-dicarbonat (BOC-Anhydrid). Eine weitere Methode ist die Umsetzung der OH-Gruppen mit Sulfonsäurederivaten, wie Mesylchlorid, Tosylchlorid, Trifluormethansulfonsäurechlorid, Trifluormethansulfonsäureanhydrid oder Benzolsulfochlorid.

In einer bevorzugten Ausführungsform werden die OH-Gruppen des Polyethercarbonatpolyols mit ungesättigten Gruppen vor der Umsetzung des ungesättigten Polyethercarbonatpolyols mit der Alkoxysilan-Verbindung der Formel (II) mit einem Schutzreagens unter Einführung von Schutzgruppen umgesetzt, wobei das Schutzreagens ausgewählt ist aus der Gruppe umfassend *N*,*O-*Bis(trimethylsilyl)acetamid (BSA), Chlortrimethylsilan, 1,1,1,3,3,3-Hexamethyldisilazane (HMDS); Mischungen aus Chlortrimethylsilan und Hexamethyldisilazan, Bromtrimethylsilan, Trimethylsilyltriflat, *N,N'*-Bis(trimethylsilyl)harnstoff, *N*,*O*-Bis(trimethylsilyl)trifluoracetamid (BSFA), Trimethyloxonium-Salze, Methylsulfonat, Methylsulfat, Essigsäureanhydrid, Chloressigsäureanhydrid, Trifluoressigsäureanhydrid, Tritylchlorid, o-Nitrobenzylchlorid, Tosylchlorid, Mesylchlorid, Tetrahydropyran, Isobuten.

Geeignete Schutzgruppen für OH-Gruppen und Reagenzien für ihre Einführung werden in den Buch Peter G.M. Wuts, Theodora W. Greene, Greene's Protective Groups in ORGANIC SYNTHESIS, 4th Edition, Wiley (2006) beschrieben. Sie können zum Schutz der terminalen OH-Gruppe der Polyethercarbonate enthaltend ungesättigten Gruppen vor Umsetzung mit Alkoxysilan-Verbindungen verwendet werden.

Die erfindungsgemäß einsetzbaren Polyethercarbonate mit ungesättigten Gruppen weisen nach der Umsetzung der terminalen OH-Gruppen und vor der Umsetzung mit Alkoxysilan-Verbindungen der Formel (II) vorzugsweise eine OH-Funktionalität (d.h. durchschnittlich Anzahl von OH-Gruppen pro Molekül) von < 0,8, bevorzugt von < 0,1 auf. In einer alternativen Ausführungsform werden die terminalen OH-Gruppen der Polyethercarbonate nicht zu einer anderen chemischen Gruppe umgesetzt. Solche Polyethercarbonate mit ungesättigten Gruppen weisen bevorzugt eine OH-Funktionalität von 1 bis 8, besonders bevorzugt von 1 bis 6 und ganz besonders bevorzugt von 2 bis 4 auf. In einer alternativen Ausführungsform werden die terminalen OH-Gruppen der Polyethercarbonate mit ungesättigten Gruppen vor der Umsetzung mit Alkoxysilan-Verbindungen der Formel (II) nicht zu einer anderen chemischen Gruppe umgesetzt. Solche Polyethercarbonate mit ungesättigten Gruppen weisen bevorzugt eine OH-Funktionalität von 1 bis 8, besonders bevorzugt von 1 bis 6 und ganz besonders bevorzugt von 2 bis 4 auf.

In einer alternativen Ausführungsform wird nach der Umsetzung des ungesättigten Polyethercarbonatpolyols mit der Alkoxysilan-Verbindung der Formel (II) die Schutzgruppe wieder entfernt und dabei ein Polyethercarbonatpolyol mit Alkoxysilyl-Gruppen erhalten. Die dazu gebräuchlichen Methoden sind dem Fachmann bekannt. Dies kann weitere Umsetzungsmöglichkeiten an den OH-Gruppen der Polyethercarbonate nach Entfernung der Schutzgruppe ermöglichen. Beispielsweise können die OH-Gruppen mit Isocyanat-Gruppen umgesetzt werden.

Eine bevorzugte Ausführungsform des Verfahrens beinhaltet die Verwendung von Polyethercarbonaten mit elektronenreichen Doppelbindungen, womit Doppelbindungen bezeichnet werden, die durch +M oder +I Substituenten, wie Aryl-, Alkyl- oder Alkoxyalkyl- oder Cycloalkylgruppen, substituiert sind. Allgemein sind elektronenreiche Doppelbindungen im Sinne der Erfindung solche, die elektronenreicher als Ethylen sind. Besonders bevorzugt sind Allylether oder Vinylverbindungen.

Die Einführung dieser Doppelbindungen in das Grundgerüst der Polyethercarbonate kann durch die Verwendung von Doppelbindungen aufweisender Epoxide als Comonomer bei der Copolymerisation von Epoxiden mit CO₂ erfolgen. Im Sinne der Erfindung verwendungsfähige Epoxide sind zum Beispiel Allylglycidylether, 1,2-Epoxy-3-vinylcyclohexan, 1,2-Epoxy-4-vinylcyclohexan, Butadienmonoepoxid, Isoprenmonoepoxid oder Limonenoxid, wobei Allylglycidylether bevorzugt ist.

Die Einführung elektronenreicher Doppelbindungen in das Polyethercarbonat kann auch durch cyclische Anhydride mit elektronenreichen Doppelbindungen erfolgen, wie 4-Cyclohexen-1,2-dicarbonsäureanhydrid, 4-Methyl-4-cyclohexen-1,2-dicarbonsäureanhydrid, Norbornendisäureanhydrid, Allylnorbornendisäureanhydrid, Dodecenylbernsteinsäureanhydrid, Tetradecenylbernsteinsäureanhydrid, Hexadecenylbernsteinsäureanhydrid oder Octadecenylbernsteinsäureanhydrid, wobei bei den Alkenylbernsteinsäureanhydriden die Doppelbindung keine exo-Doppelbindung am Ring ist.

Eine alternative Ausführungsform beinhaltet die Verwendung von Polyethercarbonaten mit elektronenarmen Doppelbindungen, womit Doppelbindungen bezeichnet werden, die durch -M oder -I Substituenten, wie Carbonylgruppen, substituiert sind.

Die Einführung solcher Doppelbindungen in das Polyethercarbonat kann vorzugsweise durch Verwendung von Glycidylestern α,β-ungesättigter Säuren, wie Acrylsäure oder Methacrylsäure, als Comonomer bei der Copolymerisation mit CO₂ erfolgen. In einer bevorzugten Ausführungsform können die Doppelbindungen auch durch die Verwendung cyclischer Anhydride, die Doppelbindungen in Nachbarschaft zu einer Carbonylgruppe tragen, als Comonomere bei der Copolymerisation mit Epoxiden und CO₂, eingeführt werden.

Es können auch Polyethercarbonate mit Alkoxysilyl-Gruppen funktionalisiert werden, die gleichzeitig elektronenreiche und -arme Doppelbindungen tragen. Auch Polyethercarbonat-Gemische mit verschiedenen ungesättigten Bausteinen können für die Funktionalisierung mit Alkoxysilyl-Gruppen eingesetzt werden. Jedoch sind Polyethercarbonate oder Gemische von Polyethercarbonaten bevorzugt, in denen der molare Gehalt an elektronenreichen Doppelbindungen größer oder gleich dem Gehalt an elektronenarmen Doppelbindungen ist. Ganz besonders bevorzugt werden Polyethercarbonate eingesetzt, die nur elektronenreiche Doppelbindungen enthalten.

Speziell für die Hydrosilylierung sind Doppelbindungen bevorzugt, die eine freie =CH₂ Gruppe aufweisen. Diese sogenannten α-Olefine zeigen in der Regel eine nur geringe sterische Hinderung an der Doppelbindung und lassen sich derart relativ leicht umsetzen. Allylglycidylether oder Vinylcyclohexenoxid sind beispielhaft als Comonomere verwendbare Epoxide, die solche Doppelbindungen in die Polyethercarbonatkette einführen.

Ferner können als Monomere Alkylenoxide (Epoxide) mit 2-45 Kohlenstoffatomen eingesetzt werden, die keine Doppelbindung tragen. Bei den Alkylenoxiden mit 2 - 45 Kohlenstoffatomen handelt es sich beispielsweise um eine oder mehrere Verbindungen ausgewählt aus der Gruppe umfassend Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, Epoxide von C6-C22 α-Olefinen, wie 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C₁-C₂₄-Ester epoxidierter Fettsäuren, Epichlorhydrin, Glycidol, und Derivate des Glycidols wie beispielsweise Glycidylether von C1-C22 Alkanolen, Glycidylester von C1-C22 Alkancarbonsäuren. Beispiele für Derivate des Glycidols sind Phenylglycidylether, Kresylglycidylether, Methylglycidylether, Ethylglycidylether und 2-Ethylhexylglycidylether. Vorzugsweise können als Alkylenoxide Ethylenoxid und/oder Propylenoxid, insbesondere Propylenoxid eingesetzt werden.

In einer Ausführungsform des Verfahrens wird das eingesetzte Polyethercarbonatpolyol mit ungesättigten Gruppen durch ein Verfahren erhalten, welches die Schritte:
(α) Vorlegen einer H-funktionellen Starterverbindung und eines Katalysators,
(γ) Zudosieren von Kohlendioxid und
   - mindestens einem Epoxid und
   - mindestens einem ungesättigten Comonomer ausgewählt aus der Gruppe der ungesättigten Epoxide und ungesättigten cyclischen Anhydride
umfasst. In einer bevorzugten Ausführungsform umfasst das Verfahren zur Herstellung des eingesetzten Polyethercarbonatpolyols mit ungesättigten Gruppen zwischen Schritt (α) und Schritt (γ) den Schritt (β) Zudosieren mindestens eines Epoxides.

Diese Art der Herstellung führt zu Polyethercarbonaten mit ungesättigten Gruppen, welche sich im Rahmen der weiteren Modifizierung mit Alkoxysilan-Verbindungen besonders eignen. Diese Polyethercarbonate mit ungesättigten Gruppen zeigen eine gute Reaktivität. Polyethercarbonate mit ungesättigten Seitenketten zeigen eine besonders niedrige Viskosität, welche, ohne durch die Theorie gebunden zu sein, durch die Verminderung der intermolekularen Polymer-Polymer Wechselwirkungen, bedingt durch den Einbau der ungesättigten Seitenketten, hervorgerufen wird. Insbesondere die Terpolymerisation mit Epoxiden, wobei mindestens eines der Epoxide eine Doppelbindung trägt, und/oder Epoxiden mit cyclischen Anhydriden zeigt diesen Effekt und ist, im Vergleich zu einer "einfachen" Polymerisation mit nur einer Monomerspezies mit ungesättigten Seitenketten, deutlich vorteilhafter. In einer weiteren Ausführungsform kann das schwerere der zudosierten Epoxide aus der Gruppe der Glycidylether ausgewählt sein, welche mindestens eine ungesättigte Bindung tragen.

Als Katalysator für die Herstellung der erfindungsgemäßen niedrigviskosen Polyethercarbonatpolyole mit Seitenketten kann beispielsweise ein DMC-Katalysator (Doppel-Metall-Cyanid-Katalysator) eingesetzt werden. Es können zusätzlich oder alternativ auch andere Katalysatoren für die Copolymerisation von Alkylenoxiden und CO₂ aktiven Katalysatoren, wie beispielsweise Zink-Carboxylate oder Kobalt-Salen-Komplexe eingesetzt werden. Geeignete Zink-Carboxylate sind beispielsweise Zinksalze von Carbonsäuren, insbesondere Dicarbonsäuren, wie Adipinsäure oder Glutarsäure. Eine Übersicht über die bekannten Katalysatoren für die Copolymerisation von Alkylenoxiden und CO₂ gibt zum Beispiel Chemical Communications 47(2011)141-163. Bevorzugt ist der Katalysator ein DMC-Katalysator.

Ein vorteilhaftes Vorgehen bei dieser Ausführungsform ist dadurch charakterisiert, dass:
(α) [erste Aktivierungsstufe] ein Suspensionsmittel, eine H-funktionelle Starterverbindung, ein Gemisch aus Suspensionsmittel und mindestens einer H-funktionellen Starterverbindung oder ein Gemisch aus mindestens zwei H-funktionellen Starterverbindungen vorgelegt und gegebenenfalls Wasser und/oder andere leicht flüchtige Verbindungen durch erhöhte Temperatur und/oder reduziertem Druck entfernt werden, wobei der Katalysator dem Suspensionsmittel, der H-funktionellen Starterverbindung, dem Gemisch aus Suspensionsmittel und mindestens einer H-funktionellen Starterverbindung oder dem Gemisch von mindestens zwei H-funktionellen Starterverbindungen vor oder nach der 1. Aktivierungsstufe zugesetzt wird,
(γ) [Polymerisationsstufe] ein oder mehrere Alkylenoxide, ein oder mehrere Comonomere und Kohlendioxid zu der aus Schritt (β) resultierenden Mischung fortwährend zudosiert werden, wobei die für die Terpolymerisation eingesetzten Alkylenoxide gleich oder von den bei Schritt (β) eingesetzten Alkylenoxiden verschieden sind und mindestens eines der zudosierten Comonomere ein Epoxid ist, das eine C2-C15 Alkenyl-Gruppe aufweist oder ein ungesätttigtes Anhydrid ist.

Bevorzugt wird zwischen Schritt (α) und Schritt (γ) eine Teilmenge (bezogen auf die Gesamtmenge der in den Schritten (β) und (γ) eingesetzten Menge an Alkylenoxiden) von einem oder mehreren Alkylenoxiden zu der aus Schritt (α) resultierenden Mischung zugesetzt ((β) [zweite Aktivierungsstufe]). Die Zugabe einer Teilmenge an Alkylenoxid kann gegebenenfalls in Gegenwart von CO₂ und/oder Inertgas (wie beispielsweise Stickstoff oder Argon) erfolgen kann. Eine Mehrfachdosierung ist ebenfalls möglich,

### Zu Schritt (α):

Die Zugabe der einzelnen Komponenten in Schritt (α) kann gleichzeitig oder nacheinander in beliebiger Reihenfolge erfolgen, bevorzugt wird in Schritt (α) zunächst der DMC-Katalysator vorgelegt und gleichzeitig oder anschließend die H-funktionelle Starterverbindung zugesetzt.

Gegenstand einer bevorzugten Ausführungsform ist ein Verfahren, wobei in Schritt (α)
(α1) in einem Reaktor der DMC-Katalysator und eine oder mehrere H-funktionelle Starterverbindungen vorgelegt werden,
(α2) [erste Aktivierungsstufe] durch den Reaktor bei einer Temperatur von 50 bis 200°C, bevorzugt von 80 bis 160°C, besonders bevorzugt von 125 bis 135°C ein Inertgas (beispielsweise Stickstoff oder ein Edelgas wie Argon), ein Inertgas-Kohlendioxid-Gemisch oder Kohlendioxid geleitet wird und gleichzeitig durch Entfernen des Inertgases oder Kohlendioxids (beispielsweise mit einer Pumpe) ein reduzierter Druck (absolut) von 10 mbar bis 800 mbar, bevorzugt von 40 mbar bis 200 mbar im Reaktor eingestellt wird.

Gegenstand einer weiteren bevorzugten Ausführungsform ist ein Verfahren, wobei in Schritt (α)
(α1) die H-funktionelle Starterverbindung oder ein Gemisch aus mindestens zwei H-funktionellen Starterverbindungen, gegebenenfalls unter Inertgasatmosphäre, unter einer Atmosphäre aus Inertgas-Kohlendioxid-Gemisch oder unter einer reinen Kohlendioxid-Atmosphäre, besonders bevorzugt unter Inertgasatmosphäre, vorgelegt wird und
(α2) [erste Aktivierungsstufe] in das resultierende Gemisch aus DMC-Katalysator und einer oder mehrerer H-funktioneller Starterverbindungen bei einer Temperatur von 50 bis 200°C, bevorzugt von 80 bis 160°C, besonders bevorzugt von 125 bis 135°C ein Inertgas, ein Inertgas-Kohlendioxid-Gemisch oder Kohlendioxid, besonders bevorzugt ein Inertgas eingeleitet und gleichzeitig durch Entfernen des Inertgases oder Kohlendioxids (beispielsweise mit einer Pumpe) ein reduzierter Druck (absolut) von 10 mbar bis 800 mbar, bevorzugt von 40 mbar bis 200 mbar im Reaktor eingestellt wird, wobei der Doppelmetallcyanid-Katalysator zu der H-funktionellen Starterverbindung oder dem Gemisch aus mindestens zwei H-funktionellen Starterverbindungen in Schritt (α1) oder unmittelbar anschließend in Schritt (α2) zugesetzt werden kann.

Der DMC-Katalysator kann in fester Form oder in einem Lösungsmittel und/oder einer H-funktionellen Starterverbindung suspendiert zugegeben werden. Wird der DMC-Katalysator als Suspension zugegeben, wird diese bevorzugt in Schritt (α1) der einen oder mehreren H-funktionellen Starterverbindungen zugefügt.

### Zu Schritt (β):

Der Schritt (β) der zweiten Aktivierungsstufe kann in Gegenwart von CO₂ und/oder einem Inertgas erfolgen. Bevorzugt erfolgt Schritt (β) unter einer Atmosphäre aus einem Inertgas-Kohlendioxid-Gemisch (beispielsweise Stickstoff-Kohlendioxid oder Argon-Kohlendioxid) oder einer Kohlendioxid-Atmosphäre, besonders bevorzugt unter Kohlendioxid-Atmosphäre. Das Einstellen einer Inertgas-Kohlendioxid-Atmosphäre oder einer Kohlendioxid-Atmosphäre und die Dosierung eines oder mehrerer Alkylenoxide können prinzipiell in unterschiedlicher Weise erfolgen. Der Vordruck wird bevorzugt durch Einleiten von Kohlendioxid eingestellt, wobei der Druck (absolut) 10 mbar bis 100 bar, vorzugsweise 100 mbar bis 50 bar und besonders bevorzugt 500 mbar bis 50 bar beträgt. Der Start der Dosierung des Alkylenoxids kann bei einem beliebig zuvor gewählten Vordruck erfolgen. Als Gesamtdruck (absolut) der Atmosphäre wird in Schritt (β) vorzugsweise ein Bereich von 10 mbar bis 100 bar, vorzugsweise 100 mbar bis 50 bar und weiterhin bevorzugt 500 mbar bis 50 bar eingestellt. Gegebenenfalls kann während oder nach der Dosierung des Alkylenoxids der Druck durch Einleiten von weiteren Kohlendioxids nachgeregelt werden, wobei der Druck (absolut) 10 mbar bis 100 bar, vorzugsweise 100 mbar bis 50 bar und bevorzugt 500 mbar bis 50 bar beträgt.

In einer bevorzugten Ausführungsform kann die bei der Aktivierung in Schritt (β) eingesetzte Menge an einem oder mehreren Alkylenoxiden 0,1 bis 25,0 Gew.%, bevorzugt 1,0 bis 20,0 Gew.%, besonders bevorzugt 2,0 bis 16,0 Gew.%, bezogen auf die im Schritt (α) eingesetzte Menge an H-funktioneller Starterverbindung betragen. Das Alkylenoxid kann in einem Schritt oder schrittweise in mehreren Teilmengen zugegeben werden.

In einer besonders bevorzugten Ausführungsform kann bei der Aktivierung in Schritt (β) eine Teilmenge (bezogen auf die Gesamtmenge der in den Schritten (β) und (γ) eingesetzten Menge an Alkylenoxiden) von einem oder mehreren Alkylenoxiden zu der aus Schritt (α) resultierenden Mischung zugesetzt [zweite Aktivierungsstufe] werden. Die Zugabe einer Teilmenge an Alkylenoxid kann gegebenenfalls in Gegenwart von CO₂ und/oder Inertgas erfolgen. Der Schritt (β) kann auch mehrfach erfolgen. Der DMC-Katalysator wird vorzugsweise in einer Menge eingesetzt, so dass der Gehalt an DMC-Katalysator im resultierenden Polyethercarbonat 10 bis 10000 ppm, besonders bevorzugt 20 bis 5000 ppm und höchst bevorzugt 50 bis 500 ppm beträgt.

Beim zweiten Aktivierungsschritt kann das Alkylenoxid beispielsweise in einer Portion oder innerhalb von 1 bis 15 Minuten, vorzugsweise 5 bis 10 Minuten zugegeben werden. Die Dauer des zweiten Aktivierungsschritts beträgt bevorzugt 15 bis 240 Minuten, besonders bevorzugt 20 bis 60 Minuten.

### Zu Schritt (γ):

Die Dosierung des oder der Epoxide und des Kohlendioxids kann simultan, wechselweise oder sequentiell erfolgen, wobei die gesamte Kohlendioxidmenge auf einmal oder über die Reaktionszeit dosiert zugegeben werden kann. Es ist möglich, während der Zugabe der Epoxide den CO₂ -Druck allmählich oder schrittweise zu steigern oder zu senken oder konstant zu lassen. Vorzugsweise wird der Gesamtdruck während der Reaktion durch eine Nachdosierung an Kohlendioxid konstant gehalten. Die Dosierung des oder der Epoxide und des CO₂ kann simultan, wechselweise oder sequentiell zur Kohlendioxid Dosierung erfolgen. Es ist möglich, das Epoxid mit einer konstanten Dosierrate zu dosieren oder die Dosierrate kontinuierlich oder schrittweise zu steigern oder zu senken oder das Epoxid portionsweise zuzugeben. Bevorzugt wird das Epoxid mit konstanter Dosierrate dem Reaktionsgemisch zugegeben. Werden mehrere Epoxide innerhalb einer Stufe zur Synthese der Polyethercarbonate eingesetzt, so können die Epoxide einzeln oder als Gemisch zudosiert werden. Die Dosierung der Epoxide kann simultan, wechselweise oder sequentiell über jeweils separate Dosierungen (Zugaben) erfolgen oder über eine oder mehrere Dosierungen, wobei die Alkylenoxide einzeln oder als Gemisch dosiert werden können. Über die Art und/oder Reihenfolge der Dosierung der Epoxide und/oder des Kohlendioxids ist es möglich, statistische, alternierende, blockartige oder gradientenartige Polyethercarbonate zu synthetisieren.

Vorzugsweise wird ein Überschuss an Kohlendioxid bezogen auf die berechnete Menge an benötigtem Kohlendioxid im Polyethercarbonat eingesetzt, da bedingt durch die Reaktionsträgheit des Kohlendioxids ein Kohlendioxid-Überschuss von Vorteil ist. Die Menge an Kohlendioxid kann über den Gesamtdruck festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonate als vorteilhaft erwiesen. Es ist möglich, das Kohlendioxid dem Reaktionsbehälter kontinuierlich oder diskontinuierlich zuzuführen. Dies hängt davon ab, wie schnell die Epoxide und das CO₂ verbraucht werden und ob das Produkt gegebenenfalls CO₂ -freie Polyether-Blöcke oder Blöcke mit unterschiedlichem CO₂-Gehalt enthalten soll. Die Konzentration des Kohlendioxids kann bei der Zugabe der Epoxide ebenso variieren. Je nach gewählten Reaktionsbedingungen ist es möglich, das CO₂ im gasförmigen, flüssigen oder überkritischen Zustand in den Reaktor einzuleiten. CO₂ kann auch als Feststoff in den Reaktor gegeben werden und dann unter den gewählten Reaktionsbedingungen in den gasförmigen, gelösten, flüssigen und/oder überkritischen Zustand übergehen.

In Schritt (γ) kann das Kohlendioxid beispielsweise in die Mischung eingeleitet werden durch
(i) Begasung des Reaktionsgemisches im Reaktor von unten,
(ii) Verwendung eines Hohlwellenrührers,
(iii) eine Kombination aus den Dosierungen gemäß (i) und (ii), und/oder
(iv) Begasung über die Flüssigkeitsoberfläche durch Einsatz mehrstufiger ausgeführter Rührorgane.

Schritt (γ) kann beispielsweise bei Temperaturen von 60 bis 150°C, vorzugsweise von 80 bis 120°C, ganz besonders bevorzugt von 90 bis 110°C durchgeführt werden. Werden Temperaturen unterhalb von 60°C eingestellt, kommt die Reaktion zum Erliegen. Bei Temperaturen oberhalb von 150°C steigt die Menge an unerwünschten Nebenprodukten stark an.

Die Begasung des Reaktionsgemisches im Reaktor gemäß (i) erfolgt bevorzugt über einen Begasungsring, eine Begasungsdüse oder über ein Gaseinleitungsrohr. Bei dem Begasungsring handelt es sich vorzugsweise um eine ringförmige Anordnung oder um zwei oder mehrere ringförmige Anordnungen von Begasungsdüsen, die bevorzugt am Boden des Reaktors und/oder an der Seitenwand des Reaktors angeordnet sind.

Der Hohlwellenrührer gemäß (ii) ist bevorzugt ein Rührer, bei dem das Gas über eine hohle Welle des Rührers in die Reaktionsmischung eingeleitet wird. Durch die Drehung des Rührers in der Reaktionsmischung (d.h. beim Mischen) entsteht an dem mit der Hohlwelle verbundenen Ende des Rührflügels ein Unterdruck derart, dass die Gasphase (enthaltend CO₂ und ggf. unverbrauchtes Alkylenoxid) aus dem über der Reaktionsmischung befindlichen Gasraum abgesaugt wird und über die Hohlwelle des Rührers in die Reaktionsmischung geleitet wird.

Die Begasung des Reaktionsgemisches gemäß (i), (ii), (iii) oder (iv) kann jeweils mit frisch zudosiertem Kohlendioxid erfolgen und/oder mit einer Absaugung des Gases aus dem Gasraum über der Reaktionsmischung und anschließender Rekompression des Gases kombiniert werden. Beispielsweise wird das aus dem Gasraum über der Reaktionsmischung abgesaugte und komprimierte Gas, gegebenenfalls gemischt mit frischem Kohlendioxid und/oder Alkylenoxid, wieder in das Reaktionsgemisches gemäß (i), (ii), (iii) und/oder (iv) eingeleitet.

Bevorzugt wird der Druckabfall, welcher über Einbau des Kohlendioxids und der Epoxide bei der Terpolymerisation in das Reaktionsprodukt entsteht, über frisch zudosiertes Kohlendioxid ausgeglichen.

Die Einleitung des Epoxids kann separat oder zusammen mit dem CO₂ sowohl über die Flüssigkeitsoberfläche oder direkt in die flüssige Phase erfolgen. Bevorzugt erfolgt die Einleitung des Epoxids direkt in die flüssige Phase, da dies den Vorteil hat, dass eine rasche Durchmischung des eingebrachten Epoxids mit der flüssigen Phase erfolgt und so lokale Konzentrationsspitzen von Epoxiden vermieden werden können. Die Einleitung in die flüssige Phase kann über ein oder mehrere Einleitungsrohre, eine oder mehrere Düsen oder eine oder mehrere ringförmige Anordnungen von Mehrfach-Dosierstellen erfolgen, die bevorzugt am Boden des Reaktors und/oder an der Seitenwand des Reaktors angeordnet sind.

Die drei Schritte (α), (β) und (γ) können in demselben Reaktor oder jeweils separat in unterschiedlichen Reaktoren durchgeführt werden. Besonders bevorzugte Reaktortypen sind Rührkessel, Rohrreaktor, und Schlaufenreaktor. Werden die Reaktionsschritte (α), (β) und (γ) in unterschiedlichen Reaktoren durchgeführt, kann für jeden Schritt ein unterschiedlicher Reaktortyp verwenden werden.

Polyethercarbonate können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, sollte besonders auf die Dosiergeschwindigkeit der Epoxide geachtet werden. Sie sollte so eingestellt werden, dass trotz der inhibierenden Wirkung des Kohlendioxids die Epoxide genügend schnell abreagieren können. Die Konzentration an freien Epoxiden in der Reaktionsmischung während der zweiten Aktivierungsstufe (Schritt β) beträgt vorzugsweise > 0 bis 100 Gew.%, besonders bevorzugt > 0 bis 50 Gew.%, höchst bevorzugt > 0 bis 20 Gew.% (jeweils bezogen auf das Gewicht der Reaktionsmischung). Die Konzentration an freien Epoxiden in der Reaktionsmischung während der Reaktion (Schritt γ) beträgt vorzugsweise > 0 bis 40 Gew.%, besonders bevorzugt > 0 bis 25 Gew.%, höchst bevorzugt > 0 bis 15 Gew.% (jeweils bezogen auf das Gewicht der Reaktionsmischung).

Eine weitere Ausführungsform im Rührkessel für die Copolymerisation (Schritt γ) ist dadurch gekennzeichnet, dass auch eine oder mehrere H-funktionelle Starterverbindungen während der Reaktion kontinuierlich in den Reaktor zudosiert werden. Bei einer Durchführung des Verfahrens im semi-batch Betrieb beträgt die Menge der H-funktionellen Starterverbindungen, die während der Reaktion kontinuierlich in den Reaktor zudosiert werden, bevorzugt mindestens 20 mol% Äquivalente, besonders bevorzugt 70 bis 95 mol% Äquivalente (jeweils bezogen auf die gesamte Menge an H-funktionellen Starterverbindungen). Bei einer kontinuierlichen Durchführung des Verfahrens beträgt die Menge der H-funktionellen Starterverbindungen, die während der Reaktion kontinuierlich in den Reaktor zudosiert werden, bevorzugt mindestens 80 mol% Äquivalente, besonders bevorzugt 95 bis 99,99 mol% Äquivalente (jeweils bezogen auf die gesamte Menge an H-funktionellen Starterverbindungen).

In einer bevorzugten Ausführungsform wird die gemäß der Schritte (α) und (β) aktivierte Katalysator-Starter-Mischung in demselben Reaktor weiter mit Epoxiden und Kohlendioxid umgesetzt.

In einer weiteren bevorzugten Ausführungsform wird die gemäß der Schritte (α) und (β) aktivierte Katalysator-Starter-Mischung in einem anderen Reaktionsbehältnis (beispielsweise einem Rührkessel, Rohrreaktor oder Schlaufenreaktor) weiter mit Epoxiden und Kohlendioxid umgesetzt. In einer weiteren bevorzugten Ausführungsform wird die gemäß Schritt (α) vorbereitete Katalysator-Starter-Mischung in einem anderen Reaktionsbehältnis (beispielsweise einem Rührkessel, Rohrreaktor oder Schlaufenreaktor) gemäß den Schritten (β) und (γ) mit Epoxiden und Kohlendioxid umgesetzt.

Bei Reaktionsführung in einem Rohrreaktor werden die gemäß Schritt (α) vorbereitete Katalysator-Starter-Mischung oder die gemäß der Schritte (α) und (β) aktivierte Katalysator-Starter-Mischung und gegebenenfalls weitere Starterverbindungen sowie Epoxide und Kohlendioxid kontinuierlich durch ein Rohr gepumpt. Bei Verwendung einer gemäß dem Schritt (α) vorbereiteten Katalysator-Starter-Mischung kann die zweite Aktivierungsstufe gemäß Schritt (β) im ersten Teil des Rohrreaktors und die Terpolymerisation gemäß Schritt (γ) im zweiten Teil des Rohrreaktors erfolgen. Die molaren Verhältnisse der Reaktionspartner könne dabei je nach gewünschtem Polymer variieren.

In einer bevorzugten Ausführungsform wird Kohlendioxid in seiner flüssigen oder überkritischen Form zudosiert, um eine optimale Mischbarkeit der Komponenten zu ermöglichen. Das Kohlendioxid kann am Eingang des Reaktors und/oder über Dosierstellen, die entlang des Reaktors angeordnet sind, in dem Reaktor eingebracht werden. Eine Teilmenge der Epoxide kann am Eingang des Reaktors eingebracht werden. Die Restmenge der Epoxide wird bevorzugt über mehrere Dosierstellen, die entlang des Reaktors angeordnet sind, in den Reaktor eingebracht. Vorteilhafterweise werden Mischelemente, wie sie zum Beispiel von der Firma Ehrfeld Mikrotechnik BTS GmbH vertrieben werden, zur besseren Durchmischung der Reaktionspartner eingebaut, oder Mischer-Wärmetauscherelemente, die gleichzeitig die Durchmischung und Wärmeabfuhr verbessern. Bevorzugt wird durch die Mischelemente zudosiertes CO₂ und Epoxide mit der Reaktionsmischung vermischt. In einer alternativen Ausführungsform werden verschiedene Volumenelemente der Reaktionsmischung miteinander vermischt.

Schlaufenreaktoren können ebenfalls zur Herstellung der erfindungsgemäß einsetzbaren Polyethercarbonaten mit ungesättigten Gruppen verwendet werden. Hierunter fallen im Allgemeinen Reaktoren mit interner und/oder externer Stoffrückführung (ggf. mit im Kreislauf angeordneten Wärmetauscherflächen), wie beispielsweise ein Strahlschlaufenreaktor, Jet-Loop Reaktor oder Venturi-Loop Reaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren oder mehreren hintereinander geschalteten Rührkesseln.

Um einen vollständigen Umsatz zu realisieren, kann dem Reaktionsapparat, in dem der Schritt (γ) durchgeführt wird, häufig ein weiterer Kessel oder ein Rohr ("Verweilrohr") nachgeschaltet werden in welchem nach der Reaktion vorhandene Restkonzentrationen freier Epoxide abreagieren. Bevorzugt liegt der Druck in diesem nachgeschalteten Reaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 10 bis 150°C und besonders bevorzugt bei 20 bis 100°C. Das Reaktionsgemisch enthält am Ende der Nachreaktionszeit bzw. am Ausgang des nachgeschalteten Reaktors vorzugsweise weniger als 0,05 Gew.% Epoxid. Die Nachreaktionszeit bzw. die Verweilzeit im nachgeschalteten Reaktor beträgt bevorzugt 10 min bis 24 h, besonders bevorzugt 10 min bis 3 h.

Als geeignete H-funktionelle Starterverbindungen (Starter) können Verbindungen mit für die Alkoxylierung aktiven H-Atomen eingesetzt werden. Für die Alkoxylierung aktive Gruppen mit aktiven H-Atomen sind beispielsweise -OH, -NH₂ (primäre Amine), -NH- (sekundäre Amine), -SH und -CO₂H, bevorzugt sind -OH und -NH₂, besonders bevorzugt ist -OH. Als H-funktionelle Starterverbindung können beispielsweise eine oder mehrere Verbindungen ausgewählt werden aus der Gruppe umfassend ein- oder mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z.B. sogenannte Jeffamine® von Huntsman, wie z.B. D-230, D-400, D-2000, T-403, T-3000, T-5000 oder entsprechende Produkte der BASF, wie z.B. Polyetheramin D230, D400, D200, T403, T5000), Polytetrahydrofurane (z.B. PolyTHF® der BASF, wie z.B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten. Beispielhaft handelt es sich bei den C1-C23 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propargylalkohol, 2-Methyl-2-propanol, *1-tert-*Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, *tert*-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-l-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Starterverbindungen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionellen Starterverbindungen können auch aus der Substanzklasse der Polyetherpolyole ausgewählt sein, insbesondere solchen mit einem Molekulargewicht Mₙ im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder EthylenoxidEinheiten sind beispielsweise die Desmophen®-, Acclaim®-, Arcol®-, Baycoll®-, Bayfill®-, Bayflex®- Baygal®-, PET®- und Polyether-Polyole der Bayer MaterialScience AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Starterverbindungen können auch aus der Substanzklasse der Polyesterpolyole ausgewählt sein, insbesondere solchen mit einem Molekulargewicht Mₙ im Bereich von 200 bis 4500 g/mol. Als Polyesterpolyole können mindestens difunktionelle Polyester eingesetzt werden. Bevorzugt bestehen Polyesterpolyole aus alternierenden Säure- und Alkoholeinheiten. Als Säurekomponenten können z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt werden. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Starterverbindungen zur Herstellung der Polyethercarbonatpolyole dienen können. Bevorzugt werden Polyetherpolyole mit Mₙ = 150 bis 2000 g/mol zur Herstellung der Polyesteretherpolyole eingesetzt.

Des Weiteren können als H-funktionelle Starterverbindungen Polycarbonatdiole eingesetzt werden, insbesondere solche mit einem Molekulargewicht Mₙ im Bereich von 150 bis 4500 g/mol, vorzugsweise 500 bis 2500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-Typen der Bayer MaterialScience AG verwendet werden, wie z.B. Desmophen® C 1100 oder Desmophen® C 2200.

In einer weiteren Ausführungsform können Polyethercarbonatpolyole und/oder Polyetherestercarbonatpolyole als H-funktionelle Starterverbindungen eingesetzt werden. Insbesondere können Polyetherestercarbonatpolyole eingesetzt werden. Diese als H-funktionelle Starterverbindungen eingesetzten Polyetherestercarbonatpolyole können hierzu in einem separaten Reaktionsschritt zuvor hergestellt werden.

Die H-funktionellen Starterverbindungen weisen im Allgemeinen eine OH-Funktionalität (d.h. Anzahl an für die Polymerisation aktiven H-Atomen pro Molekül) von 1 bis 8, bevorzugt von 2 bis 6 und besonders bevorzugt von 2 bis 4 auf. Die H-funktionellen Starterverbindungen werden entweder einzeln oder als Gemisch aus mindestens zwei H-funktionellen Starterverbindungen eingesetzt.

Bevorzugte H-funktionelle Starterverbindungen sind Alkohole mit einer Zusammensetzung nach der allgemeinen Formel (III),

HO-(CH₂)_{X}-OH (III)

wobei x eine Zahl von 1 bis 20, bevorzugt eine gerade Zahl von 2 bis 20 ist. Beispiele für Alkohole gemäß Formel (III) sind Ethylenglycol, 1,4-Butandiol, 1,6-Hexandiol, 1,8-Octandiol, 1,10 Decandiol und 1,12-Dodecandiol. Weitere bevorzugte H-funktionelle Starterverbindungen sind Neopentylglykol, Trimethylolpropan, Glycerin, Pentaerythrit, Umsetzungsprodukte der Alkohole gemäß Formel (III) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Starterverbindungen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Starterverbindungen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Starterverbindung und Propylenoxid bzw. einer di- oder tri-H-funktionellen Starterverbindung, Propylenoxid und Ethylenoxid aufgebaut ist. Die Polyetherpolyole haben bevorzugt eine OH-Funktionalität von 2 bis 4 und ein Molekulargewicht Mₙ im Bereich von 62 bis 4500 g/mol und insbesondere ein Molekulargewicht Mₙ im Bereich von 62 bis 3000 g/mol.

Doppelmetallcyanid (DMC)-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonaten bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert-Butanol) noch einen Polyether mit einem zahlenmittlerem Molekulargewicht größer als 500 g/mol enthalten.

Die erfindungsgemäß einsetzbaren DMC-Katalysatoren werden vorzugsweise erhalten, indem man
(1.) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(2.) wobei im zweiten Schritt der Feststoff aus der aus (a) erhaltenen Suspension durch bekannte Techniken (wie Zentrifugation oder Filtration) abgetrennt wird,
(3.) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(4.) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,
und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäß einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Zinkchlorid-Lösung (bevorzugt im Überschuss bezogen auf das Metallcyanidsalz) und Kaliumhexacyanocobaltat gemischt und anschließend Dimethoxyethan (Glyme) oder tert-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze weisen bevorzugt eine Zusammensetzung nach der allgemeinen Formel (IV) auf,

M(X)ₙ (IV)

wobei
M ausgewählt ist aus den Metallkationen Zn²⁺, Fe²⁺, Ni²⁺, Mn²⁺, Co²⁺, Sr²⁺, Sn²⁺, Pb²⁺ und, Cu²⁺, bevorzugt ist M Zn²⁺, Fe²⁺, Co²⁺ oder Ni²⁺,
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat und
n ist 2, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (V) auf,

Mᵣ(X)₃ (V)

wobei
M ausgewählt ist aus den Metallkationen Fe³⁺, Al³⁺, Co³⁺ und Cr³⁺,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanate Isocyanat, Isothiocyanat, Carboxylat, Oxalat und Nitrat;
r ist 2, wenn X = Sulfat, Carbonat oder Oxalat und
r ist 1, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (VI) auf,

M(X)_{S} (VI)

wobei
M ausgewählt ist aus den Metallkationen Mo⁴⁺, V⁴⁺ und W⁴⁺,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat und
s ist 4, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (VII) auf,

M(X)ₜ (VII)

wobei
M ausgewählt ist aus den Metallkationen Mo⁶⁺ und W⁶⁺,
X umfasst ein oder mehrere (d.h. verschiedene) Anionen, vorzugsweise Anionen ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat und
t ist 6, wenn X = Halogenid, Hydroxid, Carboxylat, Cyanat, Thiocyanat, Isocyanat, Isothiocyanat oder Nitrat.

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze weisen bevorzugt eine Zusammensetzung nach der allgemeinen Formel (VIII) auf

(Y)ₐM'(CN)_{b}(A)_{c} (VIII)

wobei
M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. Li⁺, Na⁺, K⁺, Rb⁺) und Erdalkalimetall (d.h. Be²⁺, Mg²⁺, Ca²⁺, Sr²⁺, Ba²⁺),
A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).

Bevorzugte Doppelmetallcyanid-Verbindungen, die in den erfindungsgemäß einsetzbaren DMC-Katalysatoren enthalten sind, sind Verbindungen mit Zusammensetzungen nach der allgemeinen Formel (IX)

Mₓ[M'ₓ,(CN)_{y}]_{z} (IX)

worin M wie in den Formeln (IV) bis (VII) und
M' wie in Formel (VIII) definiert ist, und x, x', y und z ganzzahlig sind und so gewählt, dass die Elektronenneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zink-hexacyanoiridat(III), Zinkhexacyanoferrat(III) und Kobalt(II)hexacyanokobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt kann Zinkhexacyanokobaltat(III) verwendet werden.

Die bei der Herstellung der DMC-Katalysatoren zusetzbaren organischen Komplexliganden sind beispielsweise in US-A 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, *tert-*Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-*tert*-butylether, Diethylenglykol-mono-*tert*-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, *tert*-Butanol 2-Methyl-3-buten-2-ol, 2-Methyl-3-butin-2-ol, Ethylenglykol-mono-*tert*-butylether und 3 -Methyl-3 -oxetan-methanol.

Optional werden in der Herstellung der erfindungsgemäß einsetzbaren DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, α,β-ungesättigten Carbonsäureester oder ionische oberflächen- bzw. grenzflächenaktiven Verbindungen eingesetzt.

Bevorzugt werden bei der Herstellung der erfindungsgemäß einsetzbaren DMC-Katalysatoren die wässrigen Lösungen des Metallsalzes (z.B. Zinkchlorid) im ersten Schritt im stöchiometrischen Überschuss (mindestens 50 Mol-%) bezogen auf das Metallcyanidsalz eingesetzt. Dies entspricht mindestens einem molaren Verhältnis von Metallsalz zu Metallcyanidsalz von 2,25 zu 1,00. Das Metallcyanidsalz (z.B. Kaliumhexacyanokobaltat) wird in Gegenwart des organischen Komplexliganden (z.B. *tert*-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators, wie beispielsweise in WO-A 01/39883 beschrieben.

Im zweiten Schritt kann die Isolierung des Feststoffs (d.h. die Vorstufe des Katalysators) aus der Suspension durch bekannte Techniken, wie Zentrifugation oder Filtration, erfolgen.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäß einsetzbaren Katalysator entfernt werden. Bevorzugt liegt die Menge des organischen Komplexliganden in der wässrigen Waschlösung zwischen 40 und 80 Gew.%, bezogen auf die Gesamtlösung.

Optional wird im dritten Schritt der wässrigen Waschlösung eine weitere komplexbildende Komponente, bevorzugt im Bereich zwischen 0,5 und 5 Gew.%, bezogen auf die Gesamtlösung, zugefügt.

Außerdem ist es vorteilhaft, den isolierten Feststoff mehr als einmal zu waschen. Vorzugsweise wird in einem ersten Waschschritt (3.-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäß einsetzbaren Katalysator zu entfernen. Besonders bevorzugt liegt die Menge des ungesättigten Alkohols in der wässrigen Waschlösung zwischen 40 und 80 Gew.%, bezogen auf die Gesamtlösung des ersten Waschschritts. In den weiteren Waschschritten (3.-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus ungesättigtem Alkohol und weiterer komplexbildender Komponente (bevorzugt im Bereich zwischen 0,5 und 5 Gew.%, bezogen auf die Gesamtmenge der Waschlösung des Schrittes (3.-2)), als Waschlösung eingesetzt und der Feststoff damit einmal oder mehrmals, vorzugsweise einmal bis dreimal gewaschen.

Der isolierte und gegebenenfalls gewaschene Feststoff kann anschließend, gegebenenfalls nach Pulverisierung, bei Temperaturen von 20 - 100°C und bei Drücken von 0,1 mbar bis Normaldruck (1013 mbar) getrocknet werden.

Ein bevorzugtes Verfahren zur Isolierung der erfindungsgemäß einsetzbaren DMC-Katalysatoren aus der Suspension durch Filtration, Filterkuchenwäsche und Trocknung wird in WO-A 01/80994 beschrieben.

Die ungesättigten Comonomere können statisch oder blockweise in den Polyethercarbonaten verteilt sein. Auch Gradientenpolymere sind einsetzbar.

In einer Ausführungsmöglichkeit des Verfahrens kann das Polyethercarbonat mit ungesättigten Gruppen im Verfahrensschritt (a) einen Anteil an ungesättigten Comonomeren innerhalb des Polyethercarbonats in Höhe von ≥ 0,1 mol-% und ≤ 50 mol-% aufweisen. Im Zuge der weiteren Funktionalisierung der erfindungsgemäß eingesetzten Polyethercarbonate mit ungesättigten Gruppen hat sich die Bereitstellung einer definierten Anzahl an Funktionalisierungsmöglichkeiten, welche im oben angegebenen Bereich liegt, als besonders vorteilhaft erwiesen. Das heißt, dass in dem erfindungsgemäß eingesetzten Polyethercarbonat bevorzugt im Mittel jede 2te bis jede 1000te Monomereinheit innerhalb der Polymerkette eine ungesättigte Gruppe trägt und demzufolge mit einer Alkoxysilan-Verbindungen der Formel (II) reagieren kann. Dies kann zu einer hinreichenden Anzahl Vernetzungspunkten im Zuge ein später durchgeführten Vernetzungsreaktion führen. Dadurch können besonders stabile vernetzte Polyethercarbonat-Polymere erhalten werden. Der Anteil an ungesättigten Comonomeren in den zu vernetzenden Polyethercarbonaten kann des Weiteren vorzugsweise ≥ 0,2 mol-% und ≤ 40 mol-% und ganz besonders bevorzugt ≥0,5 mol-% und ≤15 mol-% betragen.

Das Molekulargewicht der erfindungsgemäß einsetzbaren Polyethercarbonate mit ungesättigten Gruppen beträgt bevorzugt mindestens 400 g/mol, besonders bevorzugt 400 bis 1'000'000 g/mol und höchst bevorzugt 500 bis 60'000 g/mol.

Der CO₂-Gehalt der erfindungsgemäß einsetzbaren Polyethercarbonate mit ungesättigten Gruppen beträgt bevorzugt ≥ 1 Gew.-% und ≤ 40 Gew.-%, besonders bevorzugt ≥ 10 Gew.-% und ≤ 30 Gew.-%, und höchst bevorzugt ≥ 15 Gew.-% und ≤ 25 Gew.-%.

In einer bevorzugten Ausführungsform des Verfahrens kann mindestens ein Rest R1 ein C1-C4 Alkoxyrest sein. Gerade die Verwendung mindestens eines kurzkettigen Alkoxyrestes an der Alkoxysilan-Verbindung der Formel (II) kann zu einer schnellen Umsetzung der eingesetzten Silan-Verbindungen und so zu einer ökonomischen Verfahrensführung beitragen. Ohne durch die Theorie gebunden zu sein, kann ein kurzkettiger Rest die Addition der Alkoxysilan-Verbindung an die Doppelbindung des Polyethercarbonats mit ungesättigten Gruppen erleichtern, so dass die gewünschten Polyethercarbonate mit Alkoxysilyl-Gruppen mit hoher Ausbeute erhalten werden können. Beispiele für solche Verbindungen sind 3-Mercaptopropyltrimethoxysilan, 3-Mercapto¬propyl¬triethoxysilan, 3-Mercaptopropylmethyl-dimethoxysilan, 3-Mercapto¬propyl-methyl¬diethoxy¬silan, 3-Mercaptopropyldimethylmethoxysilan, 3-Mercaptopropyldimethylethoxysilan, Mercaptomethyl¬trimethoxysilan und Mercapto¬methyl-triethoxy¬silan.

Innerhalb einer alternativen Ausgestaltung des Verfahrens kann jeder der Reste R ein C1-C4 Alkoxyrest sein. Die Verwendung einer Alkoxysilan-Verbindungen in welcher jeder der Reste R ein kurzkettiger Alkoxyrest ist, kann zu einer schnellen Umsetzung der eingesetzten AlkoxysilylVerbindungen und so zu einer ökonomischen Verfahrensführung beitragen. Ohne durch die Theorie gebunden zu sein, können kurzkettige Reste an der Alkoxysilyl-Verbindung der Formel (II) die Addition an die Doppelbindung des Polyethercarbonats mit ungesättigten Gruppen erleichtern, so dass die gewünschten Polyethercarbonate enthaltend Alkoxysilyl-Gruppen mit hoher Ausbeute erhalten werden können. Beispiele für solche Verbindungen sind 3-Mercaptopropyltrimethoxysilan, 3-Mercapto¬propyl¬triethoxysilan, 3 -Mercaptopropylmethyl-dimethoxysilan, 3-Mercapto¬propyl-methyl¬diethoxy¬silan, 3 -Mercaptopropyldimethylmethoxysilan, 3-Mercapto¬propyl¬dimethyl¬ethoxysilan, Mercaptomethyl¬trimethoxysilan und Mercapto¬methyl-triethoxy¬silan.

In einer weiteren Ausführungsvariante des Verfahrens kann X = Y-S-H und Y ausgewählt sein aus der Gruppe umfassend C1-C22 Alkyl, C6-C14 Aryl, C7-C14 Aralkyl, C7-C14 Alkylaryl. Ohne durch die Theorie gebunden zu sein können durch die Zugabe mercaptofunktioneller Alkoxysilan-Verbindungen zu Polyethercarbonaten enthaltend Doppelbindungen Polyethercarbonate mit Alkoxysilyl-Gruppen erhalten werden. Ein Beispiel der Umsetzung zeigt Schema (X), wobei R1 und R2 die oben angegebene Bedeutung haben.

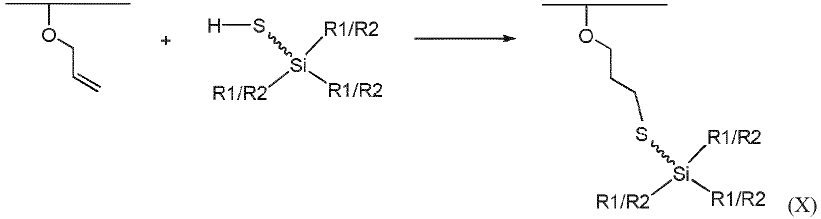

Dabei haben sich zur Addition an die erfindungsgemäß eingesetzten Polyethercarbonate mit ungesättigten Gruppen Alkoxysilan-Verbindungen mit mindestens einer Mercaptogruppe als besonders geeignet erwiesen. Diese Verbindungen lassen sich mit hohen Ausbeuten selektiv an die erfindungsgemäß eingesetzten Polyethercarbonate mit ungesättigten Gruppen addieren und führen derart zu reproduzierbar herstellbaren Polyethercarbonaten mit Alkoxysilyl-Gruppen. Die mercaptofunktionellen Alkoxysilan-Verbindungen können mit den ungesättigten Polyethercarbonaten in einem solchen Verhältnis gemischt werden, dass das Verhältnis Doppelbindung zu Mercaptogruppe 10:1 bis 1:1, vorzugsweise 2:1 bis 1:1, ganz besonders bevorzugt nahezu 1:1 beträgt. Bevorzugt steht der Rest Y für C1 - C22 Alkylen-, C6 - C14 Arylen-, C7 - C14 Aralkyl- oder C7 - C14 Alkylaryl. Vorzugsweise kann der steht der Rest Y für einen Propylenrest stehen. Des Weiteren bevorzugt können die übrigen Reste R für einen Methyl, Ethyl, Phenyl oder C1-C4-Alkoxyrest stehen. Insbesondere kann weiterhin mindestens einer der Reste R für einen C1-C4-Alkoxyrest stehen. In einer besonders bevorzugten Ausführungsform können alle Reste R für einen C1-C4-Alkoxyrest stehen. Dies kann die Addition der Alkoxysilan-Verbindungen der Formel (II) an die ungesättigten Gruppen der Polyethercarbonate erleichtern.

Des Weiteren kann in einer zusätzlichen Ausgestaltung des erfindungsgemäßen Verfahrens bei der Umsetzung des ungesättigten Polyethercarbonatpolyols mit der Alkoxysilan-Verbindung der Formel (II) eine Verbindung ausgewählt aus der Gruppe der Photoinitiatoren, metallaktivierten Peroxide und/oder Redoxinitiatoren hinzugegeben werden. Zur Erhöhung der Reaktionsgeschwindigkeit der Alkoxysilan-Verbindungen der Formel (II) mit den ungesättigten Gruppen der Polyethercarbonate kann der Reaktionsmischung ein Initiator zugesetzt werden. Die radikalische Addition kann dabei mit
- Initiatoren, die in T. Myers, N. Kirk-Othmer, Encyclopedia of Chemical Technology (5th Edition) (2005), 14 274-311 oder in J. C.Bevington, Makromolekulare Chemie, Macromolecular Symposia (1987), 10(1), 89,
- Photoinitiatoren, die in J.P. Fouassier, X. Allonas, J. Lalevee; C. Dietlin, Photochemistry and Photophysics of Polymer Materials (2010), 351-419,
- metallaktivierten Peroxiden, die in C. Sma, Angewandte Makromolekulare Chemie (1969), 9 165-181 oder mit
- Redoxinitiatoren, die in G. S. Misra,; U. D. N. Bajpai Progress in Polymer Science (1982) 8 (1-2), 61-131
beschrieben sind, beschleunigt werden.

Bevorzugt werden hierzu Photoinitiatoren eingesetzt. Erfindungsgemäß einsetzbare Photoinitiatoren sind z.B. Bis(2,4,6-Trimethylbenzoyl)-phenylphosphinoxid, Diphenylmesitoylphosphinoxid, Campher¬chi¬non, Isopropylthio¬xanthon, Michlers Keton, Benzophenon, Benzoinmethylether, Dimethoxyphenylacetophenon oder 2,2-Dimethyl-2-hydroxyacetophenon. Die eingesetzte Menge an Photoinitiator kann variieren. Für die meisten Zwecke genügt eine Menge an Photoinitiator von 0,01 bis 10 Gew.-%, vorzugsweise von 0,1 bis 1 Gew.-%, bezogen auf das Gewicht der Gesamtzusammensetzung. Die erforderliche Menge kann durch den Fachmann leicht bestimmt werden und sollte ausreichend sein, um eine Induktionsperiode von weniger als 1 Tag, vorzugsweise weniger als 1 Stunde und am meisten bevorzugt weniger als 10 Minuten zu liefern.

Bei Verwendung von Photoinitiatoren wird die Reaktionsmischung bevorzugt mit Licht bestrahlt. Die Wellenlänge und Intensität der verwendeten Strahlung kann variieren und hängt von dem verwendeten Photoinitiator ab. Die erforderliche Wellenlänge und Intensität kann durch den Fachmann leicht bestimmt werden und sollte ausreichend sein, um eine Induktionsperiode von weniger als 1 Tag, vorzugsweise weniger als 1 Stunde und am meisten bevorzugt weniger als 10 Minuten zu liefern. Zur Bestrahlung können beispielsweise Quecksilbermitteldrucklampen verwendet, wie sie in der UV-Härtung üblich sind. Beispielsweise kann die Probe mit einer Amergraph® UV-Einheit (UVA niedriger Intensität) bei einer Dosis von etwa 1 J/cm² gemessen bei 365 nm bestrahlt wurden. Es kann auch Sonnenlicht eingesetzt werden.

Die Radikalinitiatoren können in Mengen von größer oder gleich 0,01 Gew-% und kleiner oder gleich 2 Gew-% bezogen auf das Polyethercarbonat eingesetzt werden. Redoxinitiatoren sind dabei ein Gemisch aus einer oxidierenden und einer reduzierenden Substanz. Die zur Funktionalisierung eingesetzten mercaptofunktionellen Alkoxysilan-Verbindungen können dabei auch die Funktion einer reduzierenden Substanz übernehmen. Photoinitiatoren des Typs II bedürfen des Zusatzes eines Wasserstoffdonors, wie eines Amins oder einer Mercaptoverbindung, wobei auch die mercaptofunktionellen Alkoxysilan-Verbindungen diese Funktion erfüllen können.

In einer bevorzugten Ausführungsform des Verfahrens kann X = H sein. Ohne durch die Theorie gebunden zu sein können durch die Zugabe hydridfunktioneller Alkoxysilan-Verbindungen zu Polyethercarbonaten enthaltend ungesättigte Gruppen Polyethercarbonate enthaltend Alkoxysilyl-Gruppen nach folgendem Schema (XI) erhalten werden:

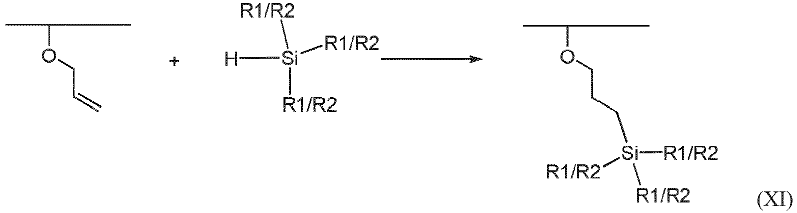

Dabei haben sich hydridfunktionelle Verbindungen zur Addition an die erfindungsgemäß eingesetzten Polyethercarbonate mit ungesättigten Gruppen als besonders geeignet erwiesen. Diese Verbindungen lassen sich mit hohen Ausbeuten selektiv an die Polyethercarbonate mit ungesättigten Gruppen addieren und führen derart zu reproduzierbar herstellbaren Polyethercarbonaten enthaltend Alkoxysilyl-Gruppen. Die hydridfunktionellen AlkoxysilylVerbindungen können mit den ungesättigten Polyethercarbonaten in einem solchen Verhältnis gemischt werden, dass das Verhältnis Doppelbindung zu hydridfunktioneller Alkoxysilan-Verbindung 10:1 bis 1:1, vorzugsweise 2:1 bis 1:1, ganz besonders bevorzugt nahezu 1:1 beträgt. Bevorzugt stehen die Reste R für einen Methyl, Ethyl, Phenyl oder C1-C4-Alkoxyrest. Insbesondere kann weiterhin mindestens einer der Reste R für einen C1-C4-Alkoxyrest stehen. In einer besonders bevorzugten Ausführungsform können alle Reste R für einen C1-C4-Alkoxyrest stehen. Dies kann die Addition der Alkoxysilan-Verbindungen der Formel (II) an die ungesättigten Gruppen der Polyethercarbonate erleichtern.

Des Weiteren kann in einer zusätzlichen Ausgestaltung des Verfahrens bei der Umsetzung des ungesättigten Polyethercarbonatpolyols mit der Alkoxysilan-Verbindung der Formel (II) eine Verbindung ausgewählt aus der Gruppe der Hydrosilylierungskatalysatoren hinzugegeben werden. Die Hydrosilylierung des Polyethercarbonats mit ungesättigten Gruppen kann besonders schnell und effektiv durch den Einsatz von Platin- und Palladiumkatalysatoren in einer Konzentration von 1 bis 5000 ppm induziert werden, wobei homogene und heterogene Katalysatoren zur Anwendung kommen können. Geeignete Katalysatoren sind in der DE 102011076687 genannt. Bei den homogenen Katalysatoren sind Karstedt-Katalysatoren bevorzugt. Dies sind Komplexe des Pt(0) mit doppelbindungshaltigen Verbindungen, insbesondere Vinylsilanen, wie Tetramethyldivinyldisiloxan oder Tetramethyltetravinylcyclotetrasiloxan). Diese sind z.B. in der Patinium Metals Review (1997), 41(2), 66 beschrieben. Desweitreren können auch Speier-Katalysatoren, d.h. Komplexe der Hexachloroplatinsäure mit Alkoholen, wie Isopropanol, eingesetzt werden. Besonders bevorzugt können Karstedt-Katalysatoren eingesetzt werden. Bevorzugt bei den heterogenen Katalysatoren sind Platinmetalle, besonders bevorzugt Platin, geträgert auf anorganischen Trägern oder Kohle, besonders bevorzugt auf Kohle. Den heterogenen Katalysatoren können noch Liganden, wie Phosphine oder Stickstoffheterocyclen, als Aktivatoren oder Co-Katalysatoren zugesetzt werden. Eine Vorschrift für die Hydrosilylierung von AlkenGruppen findet sich beispielsweise in F. Eckstorff, Y. Zhu, R. Maurer, T. E. Müller, S. Scholz, J. A. Lercher, Polymer 52 (2011) 2492-2498.

In einer Ausführungsform kann die durchschnittliche Anzahl der Alkoxysilyl-Gruppen je Molekül des erzeugten Polyethercarbonats enthaltend Alkoxysilyl-Gruppen in einem Bereich von ≥ 1 und ≤ 10000 liegen. Im Zuge der Vernetzung der erfindungsgemäß eingesetzten Polyethercarbonate enthaltend Alkoxysilyl-Gruppen hat sich die Bereitstellung einer definierten Anzahl an Vernetzungsmöglichkeiten, welche im oben angegebenen Bereich liegt, als besonders vorteilhaft erwiesen. Dies kann zu einer optimalen Anzahl an Vernetzungspunkten im Zuge ein später durchgeführten Vernetzungsreaktion führen. Dadurch können besonders stabile vernetzte Polyethercarbonat-Polymere erhalten werden. Der durchschnittliche Anzahl der Alkoxysilyl-Gruppen je Molekül des erzeugten Polyethercarbonats enthaltend Alkoxysilyl-Gruppen kann des Weiteren vorzugsweise ≥ 2 und ≤ 1000 und ganz besonders bevorzugt ≥ 5 und ≤ 100 betragen.

In einer weiteren Ausgestaltung des erfindungsgemäßen Verfahrens können die erzeugten Polyethercarbonate enthaltend Alkoxysilyl-Gruppen durch Zugabe von Wasser und/oder durch Zugabe von Di- oder Polyisocyanaten vernetzt werden. Der Vernetzung muss dabei nicht innerhalb desselben Reaktors erfolgen wie die Erzeugung des Polyethercarbonats enthaltend Alkoxysilyl-Gruppen. Außerdem ist es nicht erforderlich, dass die Vernetzung unmittelbar im Anschluss an die Erzeugung des Polyethercarbonats enthaltend Alkoxysilyl-Gruppen erfolgt. Es ist hingegen bevorzugt möglich, dass das Polyethercarbonat enthaltend Alkoxysilyl-Gruppen) isoliert und gegebenenfalls abgefüllt wird und die Vernetzung zu einem späteren Zeitpunkt ausgeführt wird. Die Feuchtigkeitshärtung der erfindungsgemäßen Polyethercarbonate enthaltend Alkoxysilyl-Gruppen erfolgt unter dem Einfluss von Wasser, das besonders bei dünnen Schichten durch die Luftfeuchtigkeit in das System eingebracht werden kann. Bei dickeren Schichten kann Wasser auch als solches in das System eingebracht werden. Die Härtungstemperatur des Polyethercarbonates enthaltend Alkoxysilyl-Gruppen kann ≥ 0 bis ≤ 140°C, bevorzugt ≥ 20 bis ≤ 60°C betragen. Des Weiteren kann gerade bei dickeren Schichten die Feuchtigkeitshärtung katalysiert werden. Geeignete Katalysatoren für die Feuchtigkeitshärtung sind in DE 102009042201 A1 genannt. Besonders als Katalysator in der Feuchtigkeitshärtung bevorzugt sind Zinnverbindungen, starke organische Basen (Amidine, Guanidine, Phosphorimine, Proazaphosphatrane) oder starke Säuren, wie Toluolsulfonsäure oder Dodecylbenzolsulfonsäure. Die Katalysatoren können in Mengen von 10 bis 50000 ppm, vorzugsweise von 100-20000 ppm, bezogen auf die Gesamtzusammensetzung eingesetzt werden.

Eine weitere Möglichkeit der Härtung der Polyethercarbonate enthaltend Alkoxysilyl-Gruppen kann sich durch die Zugabe von Di- oder Polyisocyanaten ergeben. Hierbei können die Di- oder Polyisocyanaten mit den OH-Gruppen oder den Alkoxysilyl-Gruppen des funktionalisierten Polyethercarbonats reagieren. Es lassen sich die dem Fachmann bekannten Isocyanat-Verbindungen der Polyurethan-Chemie einsetzen.

Gemäß einer weiteren Ausgestaltung des erfindungsgemäßen Verfahrens können bei der Vernetzung zusätzlich Emulgatoren zugesetzt werden. Gerade bei der Feuchtigkeitshärtung können dem Polyethercarbonat enthaltend Alkoxysilyl-Gruppen externe Emulgatoren zugesetzt werden, um die Verträglichkeit des Wassers mit der organischen Matrix zu verbessern. Geeignete Emulgatoren, sind dem Fachmann als Emulgatoren oder Netzmittel bekannt. In einer bevorzugten Ausführungsform kann das Polyethercarbonat selbst als Emulgator fungieren. Hierzu können bevorzugt Polyethercarbonate verwendet werden, welche in der Polymerkette weitere hydrophile Gruppen aufweisen. Dies lässt sich dadurch erreichen, dass das Polyethercarbonat beispielsweise auf einem hydrophilen Starter, wie z.B. Polyethylenglykol, gestartet wird. Ebenso kann ein statistischer oder blockweiser Einbau von Ethylenoxid, Methylglycidylether oder Methoxyethylglycidylether das Polyethercarbonat soweit hydrophil funktionalisieren, dass ein Ein-Emulgieren von Wasser erleichtert wird.

Des Weiteren erfindungsgemäß sind Polyethercarbonate enthaltend Alkoxysilyl-Gruppen, erhältlich nach dem erfindungsgemäßen Verfahren. Die nach dem erfindungsgemäßen Verfahren erhältlichen Alkoxysilyl-Gruppen enthaltenden Polyethercarbonate sind chemisch stabil und weisen bevorzugte Funktionalitäten im Bereich möglicher zusätzlicher Verfahrensschritte, wie zum Beispiel einer weiteren Vernetzungsreaktion, auf. Des Weiteren ist im Vergleich zum Stand der Technik genannten Polymeren in der Regel eine erhöhte OH-Funktionalität der erfindungsgemäßen Polymere gegeben, da die Umsetzung mit Alkoxysilan-Verbindungen der Formel (II) bei niedrigeren Temperaturen durchgeführt werden kann. Dies verringert die Gefahr, dass die OH-Endgruppen der OH-funktionellen Starterverbindung oder des Polymers mit den Alkyl-O-Si- oder Aryl-O-Si-Einheiten unter Umetherung reagieren. Weiterhin ergeben sich Polymere mit einer definierteren Molekulargewichtsverteilung, da eine Vernetzung der Alkoxysilyl-Gruppen während des Aufbaus des Polymers ausgeschlossen ist.

Des Weiteren erfindungsgemäß sind vernetzte siloxanfunktionelle Polyethercarbonat-Polymere erhältlich nach dem erfindungsgemäßen Verfahren. Die vernetzten siloxanfunktionellen Polyethercarbonat-Polymere zeichnen sich durch reproduzierbare mechanische Eigenschaften und eine kontrollierbare Reaktionsführung aus, da die Edukte eine enge und definierte Molekulargewichtsverteilung aufweisen. Diese ist möglich, da die Funktionalisierung mit Alkoxysilyl-Gruppen erst in einem nachgeschalteten Prozessschritt erfolgt und so eine Vernetzung der Polyethercarbonat-Ketten schon im Rahmen der Polymersynthese vermieden wird. Zudem kann eine höhere Festigkeit der Polymernetzwerke im Vergleich zu im Stand der Technik eingesetzten silanfunktionellen Polyethercarbonatpolyolen bei der Reaktion mit Di- oder Polyisocyanaten erhalten werden, da die OH-Gruppen des funktionalisierten Polyethercarbonats verlässlicher gegenüber Nebenreaktionen geschützt sind.

Die nach dem vorgestellten Verfahren erhältlichen Polyethercarbonate mit Alkoxysilyl-Gruppen können als Haftvermittler und/oder Füllstoffaktivatoren Verwendung finden. Gerade die erfindungsgemäße Kombination der unterschiedlichen funktionellen Seitengruppen im Polymer kann aufgrund der Kombination hydrophiler und hydrophober Eigenschaften zu einer besonders guten Eignung führen, unterschiedlich polare Grenzflächen miteinander zu verbinden. Demzufolge lassen sich die erfindungsgemäß herstellbaren Polyethercarbonate mit Alkoxysilyl-Gruppen besonders gut in den Fällen einsetzen, in denen eine Haftung zwischen unterschiedlich polaren Grenzflächen gewünscht ist. Ebenso lässt sich durch den Einsatz der erfindungsgemäßen Polyethercarbonate enthaltend Alkoxysilyl-Gruppen eine bessere Dispergierung von Füllstoffen erreichen. Beispiele für Füllstoffe, die durch Polyethercarbonate mit Alkoxysilyl-Gruppen aktiviert werden können, sind oxydische oder silikatische Füllstoffe, wie Silica- oder Alumina-Nanopartikel, hochdisperse Kieselsäuren, synthetische oder natürliche Silikate. Hochdisperse Kieselsäuren können z.B. durch Fällungen von Lösungen von Silikaten oder durch Flammenhydrolyse von Siliciumhalogeniden mit spezifischen Oberflächen von 5 bis 1000, vorzugsweise 20 bis 400 m²/g (BET-Oberfläche) und mit Primärteilchengrößen von 10 bis 400 nm hergestellt werden. Die Kieselsäure können gegebenenfalls auch als Mischoxide mit anderen Metalloxiden wie Aluminium-, Magnesium-, Kalzium-, Barium-, Zink-, Zirkonium-, Titanoxiden vorliegen. Des Weiteren können synthetische Silikate wie Aluminiumsilikat, Erdalkalisilikate, wie Magnesiumsilikat und/oder Kaliziumsilikat, mit BET-Oberflächen von 20 bis 400 m²/g mit Primärteilchendurchmessern von 10 bis 400 nm eingesetzt werden. Des Weiteren können natürliche Silikate, wie Kaolin, und andere natürlich vorkommenden Kieselsäuren, Metallhydroxide wie Aluminiumhydroxid und Magnesiumhydroxid eingesetzt werden. Ohne durch eine Theorie gebunden zu sein ist dies durch die chemische Umsetzung der Alkoxysilyl-Gruppen der erfindungsgemäßen Polyethercarbonate mit den OH-Gruppen auf der Oberfläche der Füllstoffe gegeben. Eine solche Aktivierung der Füllstoffe kann in der anschließenden Anwendung zu einer schnelleren Reaktionsführung und einem gleichmäßigeren Produkt beitragen.

Die nach dem vorgestellten Verfahren erhältlichen vernetzten siloxanfunktionellen Polyethercarbonat-Polymere können als Beschichtung, Schaum, Dichtmasse, thermoplastischer Kunststoff, duromerer Kunststoff, Elastomer verwendet werden. Diese Verwendung der vernetzten siloxanfunktionellen Polyethercarbonat-Polymere kann besonders vorteilhaft sein, da die Vernetzungsreaktionen kontrollierter und gleichmäßiger ablaufen können als mit dem im Stand der Technik beschrieben siloxanfunktionellen Verbindungen. Dies ist wahrscheinlich bedingt durch einen besseren Schutz der OH-Funktionalitäten im Rahmen der Polymersynthese und eine gleichmäßigere Molekularmassenverteilung der Polyethercarbonate enthaltend Alkoxysilyl-Gruppen, welche durch eine niedrigere Temperatur bei der Funktionalisierung erreicht werden kann.

Des Weiteren erfindungsgemäß ist ein Formkörper mit einer Schicht umfassend ein nach dem erfindungsgemäßen Verfahren hergestellten vernetzten siloxanfunktionellen Polyethercarbonat-Polymer. Die erfindungsgemäß hergestellten vernetzten siloxanfunktionellen Polyethercarbonat-Polymere können sich besonders zum Aufbau mechanisch stabiler Schichten auf Formkörpern eigenen, da sich die erfindungsgemäßen Polyethercarbonate einfach und reproduzierbar auf Formkörpern platzieren lassen und eine Vernetzungsreaktion zum Beispiel allein durch den Zutritt von Luftfeuchtigkeit durchführbar ist.

Hinsichtlich weiterer Vorteile und Merkmale des vorbeschriebenen Formkörpers wird hiermit explizit auf die Erläuterungen im Zusammenhang mit den erfindungsgemäßen vernetzten siloxanfunktionellen Polyethercarbonat-Polymeren, den Polyethercarbonaten enthaltend Alkoxysilyl-Gruppen sowie dem erfindungsgemäßen Verfahren verwiesen. Auch sollen erfindungsgemäße Merkmale und Vorteile der erfindungsgemäßen Polyethercarbonate enthaltend Alkoxysilyl-Gruppen auch für das erfindungsgemäße Verfahren und die erfindungsgemäßen vernetzten siloxanfunktionellen Polyethercarbonat-Polymere anwendbar sein und als offenbart gelten und umgekehrt. Unter die Erfindung fallen auch sämtliche Kombinationen aus zumindest zwei von in der Beschreibung und/oder den Ansprüchen offenbarten Merkmalen.

### Beispiele

### Substanzen:

Eingesetzte H-funktionelle Starterverbindung (Starter):

| | |
|---|---|
| PET-1 | difunktionelles Poly(oxypropylen)polyol mit einer OH-Zahl von 112 mg_{KOH}/g |

Eingesetztes Alkylenoxid, das keine Doppelbindungen trägt:

| | |
|---|---|
| PO | Propylenoxid |
| GPTMS | (3-Glycidyloxypropyl)trimethoxysilan |

Eingesetztes Comonomer:

| | |
|---|---|
| AGE | Allylglycidylether, enthaltend elektronenreiche Doppelbindungen |

Eingesetzte Alkoxysilan-Verbindungen der Formel (II):

| | |
|---|---|
| MPTS | (3-Mercaptopropyl)trimethoxysilan |
| TES | Triethoxysilan |

Reagenz zur Einführung der Schutzgruppe

| | |
|---|---|
| ESA | Essigsäureanhydrid |

Eingesetzter Radikalstarter:

| | |
|---|---|
| Irgacure 819 | Bis(2,4,6-trimethylbenzoyl)-phenylphosphinoxid |

Eingesetzte Katalysatoren:
DMC-Katalysator hergestellt nach Beispiel 6 der WO-A 01/80994
Karstedt-Katalysator Platin(0)-1,3-divinyl-1,1,3,3-tetramethyldisiloxane, 0,05 M Lösung in Xylol, Platin-Gehalt 2 Gew.-%, Sigma-Aldrich

### Methoden:

### OH-Zahl (Hydroxylzahl)

Die OH-Zahl (Hydroxylzahl) wurde in Anlehnung an DIN 53240-2 bestimmt, wobei jedoch N-Methylpyrrolidon anstelle von THF/Dichlormethan als Lösemittel verwendet wurde. Es wurde mit 0,5 molarer ethanolischer KOH Lösung titriert und die Endpunktserkennung erfolgte mittels Potentiometrie. Als Prüfsubstanz diente zertifiziertes Rizinusöl. Die Angabe der Einheit in "mg_{KOH}/g" bezieht sich auf mg[KOH]/g[Polyethercarbonat].

### Gelpermeationschromatographie

Das Zahlenmittel Mₙ und das Gewichtsmittel M_{w} des Molekulargewichts der entstandenen Polyethercarbonate wurde mittels Gelpermeationschromatographie (GPC) bestimmt. Es wurde nach DIN 55672-1: "Gelpermeationschromatographie, Teil 1 - Tetrahydrofuran als Elutionsmittel" vorgegangen (SECurity GPC-System von PSS Polymer Service, Flussrate 1.0 ml/min; Säulen: 2×PSS SDV linear M, 8×300 mm, 5 µm; RID-Detektor). Dabei wurden Polystyrolproben bekannter Molmasse zur Kalibrierung verwendet. Die Polydispersität wurde als das Verhältnis M_{w}/Mₙ berechnet.

### Rheologie

Die Viskosität des Produktgemisches wurde mit einem Rheometer Physica MCR 501 der Firma Anton Paar bei 30°C bestimmt, wobei eine Kugel-Platte-Konfiguration mit einem Kugeldurchmesser von 25 mm mit einem Abstand von 0,05 mm zwischen Kugel und Platte verwendet wurden. Die Scherrate wurde innerhalb von 10 min von 0,01 auf 1000 1/s gesteigert. Alle 10 s wurde ein Wert genommen. Angegeben ist die Viskosität als der Durchschnitt der insgesamt 60 Messwerte.

Für die rheologische Bestimmung des Gel-Punktes wurden die Polyethercarbonate mit Wasser (10 Gew.%) und Dibutylzinnlaurat (1 Gew.%) versetzt. Die komplexen Moduli G' (Speichermodul) und G" (Verlustmodul) wurden in einer Oszillationsmessung bei 25°C und einer Frequenz von 1 Hz bestimmt, wobei eine Platte-Platte-Konfiguration mit einem Plattendurchmesser von 15 mm, einem Plattenabstand von 1 mm und einer 10 prozentigen Deformation verwendet wurden. Der Gel-Punkt wurde als der Zeitpunkt definiert, an welchem Speicher- und Verlustmodul gleich groß waren.

### ¹H-NMR Spektroskopie

Die Probe wurde in deuteriertem Chloroform gelöst und auf einem Spektrometer der Firma Bruker (AV400, 400 MHz) vermessen.

### Herstellung der ungesättigten Polyethercarbonate:

Die Polymerisationsreaktionen wurden in einem 300 ml Druckreaktor der Fa. Parr durchgeführt. Der in den Beispielen eingesetzte Druckreaktor hatte eine Höhe (innen) von 10,16 cm und einen Innendurchmesser von 6,35 cm. Der Reaktor war ausgestattet mit einem elektrischen Heizmantel (510 Watt maximale Heizleistung). Die Gegenkühlung bestand in einem U-förmig gebogenen Tauchrohr mit 6 mm Außendurchmesser, das bis 5 mm über den Boden in den Reaktor ragte und das mit Kühlwasser von ca. 10°C durchströmt wurde. Der Wasserstrom wurde über ein Magnetventil ein- und ausgeschaltet. Weiterhin war der Reaktor mit einem Einleitrohr sowie einem Thermofühler mit 1,6 mm Durchmesser ausgestattet, die bis 3 mm über den Boden in den Reaktor ragten.

Die Heizleistung des elektrischen Heizmantels lag während der Aktivierung [erste Aktivierungsstufe] im Durchschnitt bei ca. 20% der maximalen Heizleistung. Durch die Regelung schwankte die Heizleistung um ±5% der maximalen Heizleistung. Das Auftreten einer erhöhten Wärmeentwicklung im Reaktor, hervorgerufen durch die rasche Umsetzung von Propylenoxid während der Aktivierung des Katalysators [zweite Aktivierungsstufe] wurde beobachtet über eine reduzierte Wärmeleistung des Heizmantels, Einschalten der Gegenkühlung und gegebenenfalls einen Temperaturanstieg im Reaktor. Das Auftreten einer Wärmeentwicklung im Reaktor, hervorgerufen durch die kontinuierliche Umsetzung von Propylenoxid während der Reaktion [Polymerisationsstufe] führte zu einem Absenken der Leistung des Heizmantels auf ca. 8% der maximalen Heizleistung. Durch die Regelung schwankte die Heizleistung um ±5% der maximalen Heizleistung.

Bei dem in den Beispielen eingesetzten Hohlwellenrührer handelte es sich um einen Hohlwellenrührer, bei dem das Gas über eine hohle Welle des Rührers in die Reaktionsmischung eingeleitet wurde. Der auf der Hohlwelle angebrachte Rührkörper wies vier Arme auf, hatte einen Durchmesser von 35 mm und eine Höhe von 14 mm. An jedem Ende des Arms waren zwei Gasauslässe angebracht, die einen Durchmesser von 3 mm aufwiesen. Durch die Drehung des Rührers entstand ein Unterdruck derart, dass das über der Reaktionsmischung befindliche Gas (CO₂ und ggf. Alkylenoxid) abgesaugt wurde und über die Hohlwelle des Rührers in die Reaktionsmischung eingeleitet wurde.

### a) Bei der Terpolymerisation von Propylenoxid, ungesättigten Epoxiden oder cyclischen Anhydriden und CO₂ resultiert neben dem cyclischen Propylencarbonat das Doppelbindungen enthaltende Polyethercarbonat, welches einerseits in Formel (VIII) gezeigte Polycarbonat-Einheiten

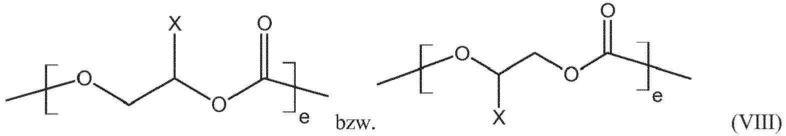

und andererseits in Formel (X) gezeigte Polyether-Einheiten 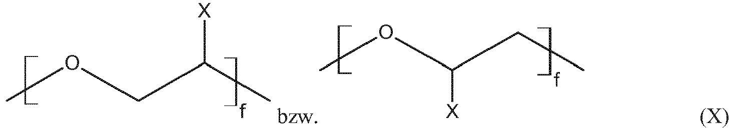 enthält. Hierbei steht X entweder für Methyl oder eine Seitenkette, die aus der Umsetzung des ungesättigten Epoxids hervorgeht. Bei Verwendung von cyclischen Anhydriden als Comonomer enthalt das Terpolymer zusätzlich Estergruppen.

Der Anteil der nicht umgesetzten Monomere (Propylenoxid R_{PO}, Allylglycidylether A_{Doppelbindung} in mol%) wurden mittels ¹H-NMR Spektroskopie bestimmt. Dazu wurde jeweils eine Probe der nach der Reaktion erhaltenen Reaktionsmischung in deuteriertem Chloroform gelöst und auf einem Spektrometer der Firma Bruker (AV400, 400 MHz) vermessen.

Anschließend wurde die Reaktionsmischung mit Dichlormethan (20 ml) verdünnt und die Lösung durch einen Fallfilmverdampfer geleitet. Die Lösung (0,1 kg in 3 h) lief entlang der inneren Wand eines von außen auf 120°C beheizten Rohres mit 70 mm Durchmesser und 200 mm Länge herab, wobei die Reaktionsmischung durch drei mit einer Geschwindigkeit von 250 U/min rotierende Rollen mit 10 mm Durchmesser jeweils gleichmäßig als dünner Film auf der inneren Wand des Fallfilmverdampfers verteilt wurde. Im Inneren des Rohres wurde über eine Pumpe ein Druck von 3 mbar eingestellt. Die von leicht flüchtigen Bestandteilen (nicht umgesetzte Epoxide, cyclisches Carbonat, Lösungsmittel) gereinigte Reaktionsmischung wurde am unteren Ende des beheizten Rohres in einer Vorlage aufgefangen.

Das molare Verhältnis von Carbonatgruppen zu Ethergruppen im Polyethercarbonat (Verhältnis e/f) sowie der molare Anteil von in das Polymer eingebautem Allylglycidylether und MPTS wurden mittels ¹H-NMR Spektroskopie bestimmt. Eine Probe der gereinigten Reaktionsmischung wurde dazu jeweils in deuteriertem Chloroform gelöst und auf einem Spektrometer der Firma Bruker (AV400, 400 MHz) vermessen.

Die relevanten Resonanzen im ¹H-NMR Spektrum (bezogen auf TMS = 0 ppm), die zur Integration verwendet wurden, sind wie folgt:

| Signal | Verschiebung in ppm | Bezeichnung | Fläche entspricht Anzahl H-Atomen |
|---|---|---|---|
| I1 | 1,10 - 1,17 | CH₃-Gruppe der Polyether-Einheiten | 3 |
| I2 | 1,25 - 1,34 | CH₃-Gruppe der Polycarbonat-Einheiten | 3 |
| I3 | 1,45 - 1,48 | CH₃-Gruppe des cyclisches Carbonats | 3 |
| 14 | 2,95 - 3,00 | CH-Gruppen des freien, nicht abreagierten Propylenoxids | 1 |
| I5 | 5,83 - 5,94 | CH Gruppe der über den Einbau von Allylglycidylether in das Polymer erhaltenen Doppelbindungen | 1 |
| I6 | 1,95-2,05 | CH₃-Gruppe der Acetyl-Endgruppen | 6 |
| I7 | 1,57-1,66 | CH₂ Gruppe des in das Polymer eingebauten MPTS | 2 |
| I8 | 0,67-0,70 | CH₂ Gruppe des in das Polymer eingebauten GPTMS | 2 |

Molares Verhältnis von Carbonatgruppen zu Ethergruppen im Polyethercarbonat (e/f): $e / f = I 2 / I 1$

Der Anteil an Carbonateinheiten in den Wiederholungseinheiten des Polyethercarbonats: ${A}_{Carbonat} = \left[\left(I 2 / 3\right) / \left(\left(I 1 / 3\right) + \left(I 2 / 3\right) + \left(I 5\right) + \left(I 6 / 6\right)\right) )\right] \times 100 %$

Der Anteil der über den Einbau des Allylglycidylethers resultierenden Doppelbindungen in den Wiederholungseinheiten des Polyethercarbonats: ${A}_{Doppelbindung} = \left[\left(I 5\right) / \left(\left(I 1 / 3\right) + \left(I 2 / 3\right) + \left(I 5\right) + \left(I 6 / 6\right)\right) )\right] \times 100 %$

Der Anteil der ESA-Endgruppen des Polyethercarbonats: ${A}_{ESA} = \left[\left(I 6 / 6\right) / \left(\left(I 1 / 3\right) + \left(I 2 / 3\right) + \left(I 5\right) + \left(I 6 / 6\right)\right) )\right] \times 100 %$

Der Anteil der MPTS-Gruppen in den Wiederholungseinheiten des Polyethercarbonats: ${A}_{MPTS} = \left[\left(I 7 / 2\right) / \left(\left(I 1 / 3\right) + \left(I 2 / 3\right) + \left(I 5\right) + \left(I 6 / 6\right) + \left(I 7 / 2\right)\right) )\right] \times 100 %$

Der Anteil der in den Wiederholungseinheiten des Polyethercarbonats verbleibenden Doppelbindungen nach Funktionalisierung mit Alkoxysilyl-Gruppen: $′ {A}_{Doppelbindung} = \left[\left(I 5\right) / \left(\left(I 1 / 3\right) + \left(I 2 / 3\right) + \left(I 5\right) + \left(I 6 / 6\right) + \left(I 7 / 2\right)\right) )\right] \times 100 %$

Der Anteil der GPTMS-Gruppen in den Wiederholungseinheiten des Polyethercarbonats: ${A}_{GPTMS} = \left[\left(I 8 / 2\right) / \left(\left(I 1 / 3\right) + \left(I 2 / 3\right) + \left(I 8 / 2\right)\right) )\right] \times 100 %$

Der molare Anteil des nicht umgesetzten Propylenoxids (R_{PO} in mol%) bezogen auf die Summe der bei der Aktivierung und der Copolymerisation eingesetzten Menge an Propylenoxid, berechnet sich nach der Formel: ${R}_{PO} = \left[I 4 / \left(\left(I 1 / 3\right) + \left(I 2 / 3\right) + \left(I 3 / 3\right) + I 4 + \left(I 5\right)\right) )\right] \times 100 %$

### Herstellung der ungesättigten Polyethercarbonate

### Ungesättigtes Polyethercarbonat 1: Terpolymerisation einer Mischung von Propylenoxid, Allylglycidylether (16,4 mol-%) und CO₂

[erste Aktivierungsstufe] In einem 970 ml Druckreaktor ausgestattet mit einem Gaseintragsrührer wurde eine Mischung aus DMC-Katalysator (104 mg) und PET-1 (130 g) vorgelegt und 30 min bei 130°C in einem partiellen Vakuum (50 mbar) unter Durchleiten von Argon durch die Reaktionsmischung gerührt.

[zweite Aktivierungsstufe] Nach Aufpressen von 15 bar CO₂, wobei ein leichter Temperaturabfall zu beobachten war, und Wiedererreichen einer Temperatur von 130°C wurden 13,0 g einer Monomermischung (30,0 Gew.% Allylglycidylether [entsprechend 16,4 Mol%] gelöst in Propylenoxid) mit Hilfe einer HPLC-Pumpe (5 ml/min) zudosiert. Die Reaktionsmischung wurde 20 min bei 130°C gerührt (800 rpm). Die Zugabe von 13,0 g einer Monomermischung wurde ein zweites und drittes Mal wiederholt.

[Polymerisationsstufe] Nach Abkühlen auf 100°C wurden weitere 203,0 g der Monomermischung (30,0 Gew.% Allylglycidylether [entsprechend 16,4 Mol%] gelöst in Propylenoxid) über eine HPLC-Pumpe (5 ml/min) zudosiert, wobei der CO₂ Druck konstant auf 15 bar gehalten wurde. Anschließend wurde die Reaktionsmischung weitere 1 h bei 100°C gerührt. Die Reaktion wurde durch Kühlung des Reaktors mit Eiswasser gestoppt. Das resultierende Gemisch war frei von den eingesetzten Monomeren Propylenoxid und Allylglycidylether. Anschließend wurde das cPC bei vermindertem Druck entfernt.

[Acetylierung] In einem 250 ml Zweihalskolben wurden Essigsäureanhydrid (100 g, 0,6 mol) und Polyethercarbonat (50 g) zusammen gegeben. Die Reaktionsmischung wurde für 4 Stunden bei 80 °C gerührt. Anschließend wurden die flüchtigen Bestandteile bei vermindertem Druck entfernt.

| | | |
|---|---|---|
| Selektivität | e/f | 0,17 |
| A_{Carbonat} in % | | 12,9 |
| A_{Doppelbindung} in % | | 10,0 |
| Molekulargewicht in g/mol | Mₙ | 4421 |
| Polydispersität | | 1,2 |

Der molare Anteil an Allylglycidylether-Gruppen bezogen auf alle Comonomer-Einheiten (Propylenoxid, Allylglycidylether, CO₂) des erhaltenen Polyethercarbonats betrug 10 mol%.

### Herstellung der Polyethercarbonate enthaltend Alkoxysilyl-Gruppen

### Beispiel 1: Herstellung eines Polyethercarbonats enthaltend 2,6 mol-% (4,2 Gew.-%) Trimethoxysilyl-Gruppen durch Umsetzung mit mercaptofunktioneller Alkoxysilan-Verbindung

In einem 50 ml Schlenkkolben wurden das ungesättigte Polyethercarbonat 1 (10,0 g) und (3-Mercaptopropyl)trimethoxysilan (0,9 g, 4,6 mmol) zusammen gegeben. Als Nächstes wurde der Photoinitiator Irgacure 819 (109 mg) in die Reaktionsmischung gegeben. Die gesamte Reaktionsmischung wurde für zwei Minuten unter Rühren mit UV-Licht bestrahlt (22 W/cm²). Anschließend wurde das hergestellte Produkt mittels NMR-Spektroskopie und GPC-Chromatographie analysiert.

| | | |
|---|---|---|
| A_{MPTS} in % | | 2,7 |
| A_{Doppelbindung} in % | | 6,2 |
| Molekulargewicht in g/mol | Mn | 5052 |
| Polydispersität | | 1,7 |

Analyse des GPC-Chromatograms zeigte eine monomodale Molekulargewichtsverteilung mit einem Maximum bei 4290 g/mol. Dies belegt, dass keine oder nur eine unwesentliche Vernetzung der Polyethercarbonat-Ketten stattgefunden hat.

Beobachtung der Lagerstabilität zeigte, dass nach der Reaktion ein niederviskoses Produkt erhalten wurde, das über 72 Stunden unverändert blieb.

### Beispiel 2: Herstellung eines Polyethercarbonats enthaltend 5,7 mol-% (7,8 Gew.-%) Trimethoxysilyl-Gruppen durch Umsetzung mit mercaptofunktioneller Alkoxvsilan-Verbindung

In einem 50 ml Schlenkkolben wurden das ungesättigte Polyethercarbonat 1 (10,0 g) und (3-Mercaptopropyl)trimethoxysilan (1,8 g, 9,2 mmol) zusammen gegeben. Als Nächstes wurde der Photoinitiator Irgacure 819 (118 mg) in die Reaktionsmischung gegeben. Die gesamte Reaktionsmischung wurde für zwei Minuten mit UV-Licht bestrahlt (22 W/cm²). Anschließend wurde das hergestellte Produkt mittels NMR-Spektroskopie und GPC-Chromatographie analysiert.

| | | |
|---|---|---|
| A_{MPTS} in % | | 5,7 |
| A_{Doppelbindung} in % | | 3,3 |
| Molekulargewicht in g/mol | Mₙ | 5561 |
| Polydispersität | | 1,7 |

Analyse des GPC-Chromatograms zeigte eine monomodale Molekulargewichtsverteilung mit einem Maximum bei 4600 g/mol. Dies belegt, dass keine oder nur eine unwesentliche Vernetzung der Polyethercarbonat-Ketten stattgefunden hat.

Beobachtung der Lagerstabilität zeigte, dass nach der Reaktion ein niederviskoses Produkt erhalten wurde, das über 72 Stunden unverändert blieb.

### Beispiel 3: Herstellung eines Polvethercarbonats enthaltend 8,0 mol-% (10,8 Gew.-%) Trimethoxysilyl-Gruppen durch Umsetzung mit mercaptofunktioneller Alkoxysilan-Verbindung

In einem 50 ml Schlenkkolben wurden das ungesättigte Polyethercarbonat 1 (10,0g) und (3-Mercaptopropyl)trimethoxysilan (2,7 g, 13,9 mol) zusammen gegeben. Als Nächstes wurde der Photoinitiator Irgacure 819 (29 mg) in die Reaktionsmischung gegeben. Die gesamte Reaktionsmischung wurde für zwei Minuten mit UV-Licht bestrahlt (22 W/cm²). Anschließend wurde das hergestellte Produkt mittels NMR-Spektroskopie und GPC-Chromatographie analysiert.

| | | |
|---|---|---|
| A_{MPTS} in % | | 8,0 |
| A_{Doppelbindung} in % | | 1,0 |
| Molekulargewicht in g/mol | Mn | 5822 |
| Polydispersität | | 1,8 |

Analyse des GPC-Chromatograms zeigte eine monomodale Molekulargewichtsverteilung mit einem Maximum bei 4800 g/mol.. Dies belegt, dass keine oder nur eine unwesentliche Vernetzung der Polyethercarbonat-Ketten stattgefunden hat.

Beobachtung der Lagerstabilität zeigte, dass nach der Reaktion ein niederviskoses Produkt erhalten wurde, das über 72 Stunden unverändert blieb.

### Beispiel 4: Herstellung eines Polvethercarbonats enthaltend 9,0 mol-% (3,6 Gew.-%) Triethoxysilyl-Gruppen durch Umsetzung mit hydridofunktioneller Alkoxysilan-Verbindung

In einem 100 ml Zweihalskolben wurden das ungesättigte Polyethercarbonat 1 (10 g) und Triethoxysilan (5 g) vorgelegt und unter Argon auf 80°C erhitzt. Anschließend wurde der Karstedt-Katalysator (500 µl, 0,05 M) in die Reaktionsmischung gegeben. Die Reaktionsmischung wurde für eine Stunde gerührt. Anschließend wurden die flüchtigen Bestandteile bei vermindertem Druck entfernt. Das hergestellte Produkt wurde mittels NMR-Spektroskopie und GPC-Chromatographie analysiert.

| | | |
|---|---|---|
| A_{TES} in % | | 9 |
| 'A_{Doppelbindung} in % | | 1 |
| Molekulargewicht in g/mol | Mₙ | 5930 |
| Polydispersität | | 2,7 |

Analyse des GPC-Chromatograms zeigte eine monomodale Molekulargewichtsverteilung. Dies belegt, dass keine oder nur eine unwesentliche Vernetzung der Polyethercarbonat-Ketten stattgefunden hat.

Beobachtung der Lagerstabilität zeigte, dass nach der Reaktion ein niederviskoses Produkt erhalten wurde, das über 72 Stunden unverändert blieb.

### Herstellung vernetzter siloxanfunktioneller Polyethercarbonat-Polymere durch Umsetzung der erfindungsgemäßen Polyethercarbonate enthaltend Alkoxysilyl-Gruppen mit Wasser

### Beispiel 5: Aushärtung einer Mischung aus Polyethercarbonat enthaltend Alkoxysilyl-Gruppen (Beispiel 1) und Wasser

In einer Aluminiumschale wurden 1,0 g des Polyethercarbonats aus Beispiel 1 mit Wasser (0,1 g) und Dibutylzinndilaurat (20 mg) vermischt. Anschließend wurden 0,4 g der Mischung mit dem Rheometer untersucht. Der Gelpunkt trat nach 23,5 min ein.

### Beispiel 6: Aushärtung einer Mischung aus Polvethercarbonat enthaltend Alkoxysilyl-Gruppen (Beispiel 2) und Wasser

In einer Aluminiumschale wurden 1,0 g des Polyethercarbonats aus Beispiel 2 mit Wasser (0,1 g) und Dibutylzinndilaurat (20 mg) vermischt. Anschließend wurden 0,4 g der Mischung mit dem Rheometer untersucht. Der Gelpunkt trat nach 9,5 min ein.

### Beispiel 7: Aushärtung einer Mischung aus Polyethercarbonat enthaltend Alkoxysilyl-Gruppen (Beispiel 3) und Wasser

In einer Aluminiumschale wurden 1,0 g des Polyethercarbonats aus Beispiel 3 mit Wasser (0,1 g) und Dibutylzinndilaurat (20 mg) vermischt. Anschließend wurden 0,4 g der Mischung mit dem Rheometer untersucht. Der Gelpunkt trat nach < 1 min ein.

### Beispiel 8: Aushärtung einer Mischung aus Polyethercarbonat enthaltend Alkoxysilyl-Gruppen (Beispiel 4) und Wasser

In einer Aluminiumschale wurden 1,0 g des Polyethercarbonats aus Beispiel 4 mit Wasser (0,1 g) und Dibutylzinndilaurat (20 mg) vermischt. Anschließend wurden 0,4 g der Mischung mit dem Rheometer untersucht. Der Gelpunkt trat nach 45,0 min ein.

### Beispiel 9 (Vgl.): Aushärtung einer Mischung eines Polyethercarbonats ohne Alkoxysilyl-Gruppen und Wasser

In einer Aluminiumschale wurden 1,0 g des ungesättigten Polyethercarbonats 1 mit Wasser (0,1 g) und Dibutylzinndilaurat (20 mg) vermischt. Anschließend wurden 0,4 g der Mischung mit dem Rheometer untersucht. Es war kein Gelpunkt zu beobachten.

**Tabelle 1: Vergleich der Resultate aus den Beispielen 5 bis 8**

| Beispiel | Monomer zur Einführung der Alkoxysilyl-Gruppe | Anteil Alkoxysilyl-Gruppen im Polyethercarbonate in mol-% | Zeit bis Erreichen des Gelpunktes in Minuten |
|---|---|---|---|
| 5 | MPTS | 2,6 | 23,5 |
| 6 | MPTS | 5,7 | 9,5 |
| 7 | MPTS | 8,0 | < 1 |
| 8 | TES | 9,0 | 45,0 |
| 9 (Vgl.) | - | 0 | keine Aushärtung |

| | | | |
|---|---|---|---|
| Vgl.: Vergleichsbeispiel | | | |

Die Beispiele 5 bis 7 belegen, dass Polyethercarbonate enthaltend Alkoxysilyl-Gruppen hergestellt durch Umsetzung eines ungesättigten Polyethercarbonats mit einer mercaptofunktionellen Alkoxysilan-Verbindung (MPTS) in Gegenwart von Wasser aushärten. Das Beispiel 8 belegt, dass Polyethercarbonate enthaltend Alkoxysilyl-Gruppen hergestellt durch Umsetzung eines ungesättigten Polyethercarbonats mit einer hydridofunktionellen Alkoxysilan-Verbindung (TES) in Gegenwart von Wasser aushärten.

Ein Vergleich der Beispiele 5 bis 8 mit dem Vergleichsbeispiel 9 zeigt, dass Polyethercarbonate enthaltend Alkoxysilyl-Gruppen in Gegenwart von Wasser aushärten, während das Polyethercarbonat ohne Einbau von Alkoxysilyl-Gruppen nicht aushärtet. Mit einem steigendem Anteil an Alkoxysilyl-Gruppen im Polyethercarbonat sinkt die Zeit bis zum Erreichen des Gelpunktes von 23,5 min (Beispiel 5) auf < 1 min (Beispiel 7).

### Herstellung vernetzter siloxanfunktioneller Polyethercarbonat-Polymere durch Umsetzung der erfindungsgemäßen Polyethercarbonate enthaltend Alkoxysilyl-Gruppen mit Kieselgel

### Beispiel 10: Aushärtung einer Mischung aus Polyethercarbonat enthaltend Alkoxysilyl-Gruppen (Beispiel 1) und Kieselgel

In einer Aluminiumschale wurden 1,5 g des Polyethercarbonats aus Beispiel 1 mit Kieselgel (mesh 60, 75 mg) und Dibutylzinndilaurat (30 mg) vermischt. Anschließend wurden 0,4 g der Mischung mit dem Rheometer untersucht. Der Gelpunkt trat nach 60 min ein.

### Beispiel 11: Aushärtung einer Mischung aus Polyethercarbonat enthaltend Alkoxysilyl-Gruppen (Beispiel 2) und Kieselgel

In einer Aluminiumschale wurden 1,5 g des Polyethercarbonats aus Beispiel 2 mit Kieselgel (mesh 60, 75 mg) und Dibutylzinndilaurat (30 mg) vermischt. Anschließend wurden 0,4 g der Mischung mit dem Rheometer untersucht. Der Gelpunkt trat nach 20 min ein.

### Beispiel 12: Aushärtung einer Mischung aus Polyethercarbonat enthaltend Alkoxysilyl-Gruppen (Beispiel 4) und Kieselgel (mesh 60)

In einer Aluminiumschale wurden 1,5 g des Polyethercarbonats aus Beispiel 4 mit Kieselgel (75 mg) und Dibutylzinndilaurat (30 mg) vermischt. Anschließend wurden 0,4 g der Mischung mit dem Rheometer untersucht. Der Gelpunkt trat nach 52 min ein.

### Beispiel 13 (Vgl.): Aushärtung einer Mischung eines Polyethercarbonats ohne Alkoxysilyl-Gruppen und Kieselgel

In einer Aluminiumschale wurden 1,5 g des ungesättigten Polyethercarbonats 1 mit Kieselgel (mesh 60, 75 mg) und Dibutylzinndilaurat (30 mg) vermischt. Anschließend wurden 0,4 g der Mischung mit dem Rheometer untersucht. Es war kein Gelpunkt zu beobachten.

**Tabelle 2: Vergleich der Resultate aus den Beispielen 10 bis 13**

| Beispiel | Monomer zur Einführung der Alkoxysilyl-Gruppe | Anteil Alkoxysilyl-Gruppen im Polyethercarbonat in mol-% | Zeit bis Erreichen des Gelpunktes in Minuten |
|---|---|---|---|
| 10 | MPTS | 2,6 | 60 |
| 11 | MPTS | 5,7 | 20 |
| 12 | TES | 9 | 52 |
| 13 (Vgl.) | - | 0 | keine Aushärtung |

| | | | |
|---|---|---|---|
| Vgl.: Vergleichsbeispiel | | | |

Die Beispiele 10 bis 11 belegen, dass Polyethercarbonate enthaltend Alkoxysilyl-Gruppen hergestellt durch Umsetzung eines ungesättigten Polyethercarbonats mit einer mercaptofunktionellen Alkoxysilan-Verbindung (MPTS) in Gegenwart von Kieselgel aushärten. Das Beispiel 12 belegt, dass Polyethercarbonate enthaltend Alkoxysilyl-Gruppen hergestellt durch Umsetzung eines ungesättigten Polyethercarbonats mit einer hydridofunktionellen Alkoxysilan-Verbindung (TES) in Gegenwart von Kieselgel aushärten.

Ein Vergleich der Beispiele 10 bis 12 mit dem Vergleichsbeispiel 13 zeigt, dass Polyethercarbonate enthaltend Alkoxysilyl-Gruppen (Beispiele 10 bis 12) in Gegenwart von Kieselgel aushärten, während das Polyethercarbonat ohne Alkoxysilyl-Gruppen (Vergleichsbeispiel 13) nicht aushärtet. Mit einem steigendem Anteil an Alkoxysilyl-Gruppen im Polyethercarbonat sinkt die Zeit bis zum Erreichen des Gelpunktes von 60 min (Beispiel 10) auf < 20 min (Beispiel 11).

### Beispiel 14 (Vgl.): Terpolymerisation von Propylenoxid, (3-Glycidyloxypropyl)trimethoxysilan und CO₂

[erste Aktivierungsstufe] In einem 970 ml Druckreaktor ausgestattet mit einem Gaseintragsrührer wurde eine Mischung aus DMC-Katalysator (78 mg) und PET-1 (130,0 g) vorgelegt und 30 min bei 130°C in einem partiellen Vakuum (50 mbar) unter Durchleiten von Argon durch die Reaktionsmischung gerührt.

[zweite Aktivierungsstufe] Nach Aufpressen von 15 bar CO₂, wobei ein leichter Temperaturabfall zu beobachten war, und Wiedererreichen einer Temperatur von 130°C wurden 13 g Propylenoxid mit Hilfe einer HPLC-Pumpe (5 ml/min) zudosiert. Die Reaktionsmischung wurde 20 min bei 130°C gerührt (800 rpm). Die Zugabe von 13,0 g Propylenoxid wurde ein zweites und drittes Mal wiederholt.

[Polymerisationsstufe] Nach Abkühlen auf 100°C wurden weitere 150,5 g Propylenoxid über eine HPLC-Pumpe (5 ml/min) zudosiert. Gleichzeitig mit Beginn der Zugabe von Propylenoxid in der Polymerisationsstufe wurden unter Rühren 70 g (3-Glycidyloxypropyl)trimethoxysilan über eine separate HPLC-Pumpe (2,3 mL/min) zudosiert, wobei der CO₂ Druck konstant auf 15 bar gehalten wurde. Anschließend wurde die Reaktionsmischung weitere 2 h bei 100°C gerührt. Die Reaktion wurde durch Kühlung des Reaktors mit Eiswasser gestoppt. Das resultierende Gemisch war frei von den eingesetzten Monomeren Propylenoxid und (3-Glycidyloxypropyl)trimethoxysilan. Anschließend wurde das cPC bei vermindertem Druck entfernt.

Das hergestellte Produkt wurde mittels NMR-Spektroskopie und GPC-Chromatographie analysiert.

| | | |
|---|---|---|
| Selektivität | e/f | 0,13 |
| A_{Carbonat} in % | | 0,08 |
| A_{GPTMS} in % | | 4,29 |
| Molekulargewicht in g/mol | Mₙ | 2922 |
| Polydispersität | | 1,39 |

Analyse des GPC-Chromatograms zeigte eine trimodale Molekulargewichtsverteilung mit Maxima bei 1800, 3600 und 6500 g/mol. Dies belegt, dass eine Vernetzung der Polyethercarbonat-Ketten stattgefunden hat.

Beobachtung der Lagerstabilität zeigte, dass nach der Reaktion ein viskoses Produkt erhalten wurde, das nach 24 Stunden zu einem Gel mit leichter Vernetzung, nach 48 Stunden einem Gel mit starker Vernetzung und nach 72 Stunden einem Feststoff wurde.

### Vergleich

Die Lagerstabilität der erhaltenen Probe aus Vergleichsbeispiel 14 ist in der nachfolgenden Tabelle mit der Lagerstabilität einer Probe eines nach dem erfindungsgemäßen Verfahren erhaltenen Polyethercarbonats enthaltend Alkoxysilyl-Gruppen (Beispiele 1 bis 4) verglichen.

**Tabelle 2: Vergleich der Resultate aus den Beispielen 2 und 14**

| Beispiel | Zustand nach Reaktion | Zustand nach 24 h | Zustand nach 48 h | Zustand nach 72 h |
|---|---|---|---|---|
| 1 | Flüssig | Flüssig | Flüssig | Flüssig |
| 2 | Flüssig | Flüssig | Flüssig | Flüssig |
| 3 | Flüssig | Flüssig | Flüssig | Flüssig |
| 4 | Flüssig | Flüssig | Flüssig | Flüssig |
| 14 (Vgl.) | Viskos | Gel mit leichter Vernetzung | Gel mit starker Vernetzung | Feststoff |

| | | | | |
|---|---|---|---|---|
| Vgl.: Vergleichsbeispiel | | | | |

Ein Vergleich von Beispielen 1 bis 4 mit dem Vergleichsbeispiel 14 belegt, dass Polyethercarbonate enthaltend Alkoxysilyl-Gruppen, die durch Umsetzung eines ungesättigten Polyethercarbonats mit einer mercaptofunktionellen Alkoxysilan-Verbindung (MPTS) erhalten wurden (erfindungsgemäß), über 72 h unverändert bleiben (Beispiele 1 bis 4) während Polyethercarbonate enthaltend Alkoxysilyl-Gruppen, die durch Terpolymerisation von Propylenoxid, (3-Glycidyloxypropyl)trimethoxysilan und CO₂ erhalten wurden (Nachstellung von EP 2 093 244 A1, Vergleichsbeispiel 14) durch Reaktion von ungeschützten OH-Gruppen und Alkoxysilan-Gruppen ein Netzwerk ausbilden, das innerhalb von 72 h zunächst zu Vergelung, dann zu einem Feststoff führt.

## Patentansprüche

1. Verfahren zur Herstellung von Polyethercarbonaten enthaltend Alkoxysilyl-Gruppen,
**dadurch gekennzeichnet, dass**
(a) ein ungesättigtes Polyethercarbonatpolyol mit
(b) einer Alkoxysilan-Verbindung der Formel (II)
Si(X)ₘ(R1)ₙ(R2)ₒ (II)
zur Reaktion gebracht wird, wobei
X = H, Y-S-H und Y = C1-C22 Alkylen, C6-C14 Arylen, C7-C14 Aralkylen, C7-C14 Alkylarylen;
R1 = C1-C8-Alkoxy, C7-C20-Aralkoxy, C6-C14-Aroxy, C7-C20-Alkylaroxy;
R2 = C1-C22 Alkyl, C6-C14 Aryl, C7-C14 Aralkyl, C7-C14 Alkylaryl und
m und n unabhängig voneinander eine ganze Zahl ≥ 1,
o null oder eine ganze Zahl ≥ 1 und
m + n + o = 4 ist.

2. Verfahren nach Anspruch 1, **dadurch gekennzeichnet, dass** die Herstellung des ungesättigten Polyethercarbonatpolyols in der Weise erfolgt, dass zunächst eine H-funktionelle Starterverbindung und ein Katalysator vorgelegt und anschließend mit Kohlendioxid, mindestens einem Alkylenoxid und mindestens einem ungesättigten Comonomeren ausgewählt aus der Gruppe der ungesättigten Alkylenoxide und ungesättigten cyclischen Anhydride organischer Säuren umgesetzt wird.

3. Verfahren nach Anspruch 2, **dadurch gekennzeichnet, dass** der Katalysator ein Doppelmetallcyanid-Katalysator ist.

4. Verfahren nach Anspruch 2 oder 3, **dadurch gekennzeichnet, dass** der Anteil an ungesättigten Comonomeren bei der Herstellung des ungesättigten Polyethercarbonatpolyols 0,1 bis 50 mol-% bezogen auf die Gesamtstoffmenge aus Kohlendioxid, Alkylenoxid und Comonomeren beträgt.

5. Verfahren nach einem der vorstehenden Ansprüche, **dadurch gekennzeichnet, dass** m = 1 ist.

6. Verfahren nach einem der vorstehenden Ansprüche, **dadurch gekennzeichnet, dass** bei der Umsetzung des ungesättigten Polyethercarbonatpolyols mit der Alkoxysilan-Verbindung der Formel (II) in der X = Y-S-H ist, eine Verbindung ausgewählt aus der Gruppe der Photoinitiatoren, Peroxide, Azoverbindungen, metallaktivierten Peroxide und/oder Redoxinitiatoren hinzugegeben wird.

7. Verfahren nach einem der Ansprüche 1 bis 5, **dadurch gekennzeichnet, dass** bei der Umsetzung des ungesättigten Polyethercarbonatpolyols mit der Alkoxysilan-Verbindung der Formel (II) in der X = H ist, ein Hydrosilylierungskatalysator aus der Gruppe der Karstedt- oder Speier-Katalysatoren, elementares Platin, elementares Platin auf einem Träger aus Aktivkohle oder Aluminiumoxid, oder Mischungen hiervon hinzugegeben wird.

8. Verfahren nach einem der vorstehenden Ansprüche, **dadurch gekennzeichnet, dass** das die OH-Gruppen des ungesättigten Polyethercarbonatpolyols vor der Umsetzung des ungesättigten Polyethercarbonatpolyols mit der Alkoxysilan-Verbindung der Formel (II) mit einem Schutzreagens unter Einführung von Schutzgruppen umgesetzt werden, wobei das Schutzreagens insbesondere ausgewählt ist aus der Gruppe umfassend, Trimethyloxonium-tetrafluoroborat, Methylmesylat, Methyltosylat, Dimethylsulfat, Methyltriflat, Diazomethan, Essigsäureanhydrid, Chloracetylanhydrid, Trifluoracetylanhydrid, *N*,*O*-bis(trimethylsilyl)acetamid, Hexamethyldisilazan im äquimolaren Gemisch mit Chlortrimethylsilan oder mit Chlortrimethylsilan im molaren Überschuss, Chlortrimethylsilan, Trimethylsilyltriflat, Tritylchlorid, o-Nitrobenzylchlorid, Tosylchlorid, Mesylchlorid, Tetrahydropyran und Isobuten, wobei nach der Umsetzung des ungesättigten Polyethercarbonatpolyols mit der Alkoxysilan-Verbindung der Formel (II) die Schutzgruppe optional teilweise oder vollständig wieder entfernt und dabei ein Polyethercarbonatpolyol enthaltend Alkoxysilyl-Gruppen erhalten wird.

9. Verfahren zur Herstellung eines Polyurethan-Polymers enthaltend Alkoxysilyl-Gruppen, **dadurch gekennzeichnet, dass** ein Polyethercarbonatpolyol enthaltend Alkoxysilyl-Gruppen erhältlich nach einem Verfahren gemäß einem der Ansprüche 1 bis 8 mit einer Polyisocyanat-Verbindung umgesetzt wird, wobei die Menge an eingesetzter Polyisocyanat-Verbindung insbesondere in der Weise gewählt wird, dass das molare Verhältnis ihrer Isocyanatgruppen zu den Hydroxylgruppen des Polyethercarbonatpolyols enthaltend Alkoxysilyl-Gruppen kleiner als 1 : 1 ist.

10. Verfahren nach einem der vorstehenden Ansprüche, **dadurch gekennzeichnet, dass**
- das Polyethercarbonat enthaltend Alkoxysilyl-Gruppen,
- das Polyethercarbonatpolyol enthaltend Alkoxysilyl-Gruppen,
- eine Mischung aus Polyethercarbonat enthaltend Alkoxysilyl-Gruppen und Polyethercarbonatpolyol enthaltend Alkoxysilyl-Gruppen oder
- das Polyurethan-Polymer enthaltend Alkoxysilyl-Gruppen
vernetzt wird, insbesondere durch Zugabe von Wasser.

11. Polyethercarbonat enthaltend Alkoxysilyl-Gruppen oder Polyethercarbonatpolyol enthaltend Alkoxysilyl-Gruppen, erhältlich nach einem Verfahren gemäß einem der Ansprüche 1 bis 8.

12. Polyurethan-Polymer enthaltend Alkoxysilyl-Gruppen, erhältlich nach einem Verfahren gemäß Anspruch 9.

13. Vernetztes, Siloxangruppen-enthaltendes Polymer, erhältlich nach einem Verfahren gemäß Anspruch 10.

14. Verwendung eines Polyethercarbonats enthaltend Alkoxysilyl-Gruppen oder eines Polyethercarbonatpolyols enthaltend Alkoxysilyl-Gruppen gemäß Anspruch 11 als Haftvermittler, Füllstoffaktivator oder in Kleb- und Dichtstoffen, wobei der Haftvermittler, der Füllstoffaktivator und der Kleb- und Dichtstoff insbesondere kieselsäurehaltige Füllstoffe enthält.

15. Verwendung eines Polyurethan-Polymers enthaltend Alkoxysilyl-Gruppen gemäß Anspruch 12 als Haftvermittler, Füllstoffaktivator oder in Kleb- und Dichtstoffen, wobei der Haftvermittler, der Füllstoffaktivator und der Kleb- und Dichtstoff insbesondere kieselsäurehaltige Füllstoffe enthält.

16. Verwendung eines vernetzten, Siloxangruppen-enthaltenden Polymers gemäß Anspruch 13 als Beschichtungsmittel, Schaum, Dichtmasse, thermoplastischer Kunststoff, duromerer Kunststoff oder Elastomer, wobei das Beschichtungsmittel, der Schaum, die Dichtmasse, der thermoplastische Kunststoff, der duromere Kunststoff oder das Elastomer insbesondere kieselsäurehaltige Füllstoffe enthält.

17. Formkörper, der ein vernetztes, Siloxangruppen-enthaltendes Polymer gemäß Anspruch 13 enthält oder daraus besteht.

## Claims

1. Process for preparing polyether carbonates containing alkoxysilyl groups, **characterized in that**
(a) an unsaturated polyether carbonate polyol is reacted with
(b) an alkoxysilane compound of the formula (II)
Si(X)ₘ(R1)ₙ(R2)ₒ (II)
where
X = H, Y-S-H and Y = C1-C22 alkylene, C6-C14 arylene, C7-C14 aralkylene, C7-C14 alkylarylene;
R1 = C1-C8-alkoxy, C7-C20-aralkoxy, C6-C14-aroxy, C7-C20-alkylaroxy;
R2 = C1-C22 alkyl, C6-C14 aryl, C7-C14 aralkyl, C7-C14 alkylaryl and
m and n are independently an integer ≥ 1,
o is zero or an integer ≥ 1 and
m + n + o = 4.

2. Process according to Claim 1, **characterized in that** the unsaturated polyether carbonate polyol is prepared by first initially charging an H-functional starter compound and a catalyst and then reacting with carbon dioxide, at least one alkylene oxide and at least one unsaturated comonomer selected from the group of the unsaturated alkylene oxides and unsaturated cyclic anhydrides of organic acids.

3. Process according to Claim 2, **characterized in that** the catalyst is a double metal cyanide catalyst.

4. Process according to Claim 2 or 3, **characterized in that** the proportion of unsaturated comonomers in the preparation of the unsaturated polyether carbonate polyol is 0.1 to 50 mol% based on the total molar amount of carbon dioxide, alkylene oxide and comonomers.

5. Process according to any of the preceding claims, **characterized in that** m = 1.

6. Process according to any of the preceding claims, **characterized in that**, in the reaction of the unsaturated polyether carbonate polyol with the alkoxysilane compound of the formula (II) in which X = Y-S-H, a compound selected from the group of the photoinitiators, peroxides, azo compounds, metal-activated peroxides and/or redox initiators is added.

7. Process according to any of Claims 1 to 5, **characterized in that**, in the reaction of the unsaturated polyether carbonate polyol with the alkoxysilane compound of the formula (II) in which X = H, a hydrosilylation catalyst from the group of the Karstedt or Speier catalysts, elemental platinum, elemental platinum on a support composed of activated carbon or alumina, or mixtures thereof is added.

8. Process according to any of the preceding claims, **characterized in that** the OH groups of the unsaturated polyether carbonate polyol, prior to the reaction of the unsaturated polyether carbonate polyol with the alkoxysilane compound of the formula (II), are reacted with a protecting reagent to introduce protecting groups, the protecting reagent especially being selected from the group comprising trimethyloxonium tetrafluoroborate, methyl mesylate, methyl tosylate, dimethyl sulfate, methyl triflate, diazomethane, acetic anhydride, chloroacetyl anhydride, trifluoroacetyl anhydride, *N,O-*bis(trimethylsilyl)acetamide, hexamethyldisilazane in an equimolar mixture with chlorotrimethylsilane or with chlorotrimethylsilane in a molar excess, chlorotrimethylsilane, trimethylsilyl triflate, trityl chloride, o-nitrobenzyl chloride, tosyl chloride, mesyl chloride, tetrahydropyran and isobutene, and, after the reaction of the unsaturated polyether carbonate polyol with the alkoxysilane compound of the formula (II), the protecting group is optionally partly or fully removed again to obtain a polyether carbonate polyol containing alkoxysilyl groups.

9. Process for preparing a polyurethane polymer containing alkoxysilyl groups, **characterized in that** a polyether carbonate polyol containing alkoxysilyl groups obtainable by a process according to any of Claims 1 to 8 is reacted with a polyisocyanate compound, the amount of polyisocyanate compound used especially being chosen in such a way that the molar ratio of isocyanate groups thereof to the hydroxyl groups of the polyether carbonate polyol containing alkoxysilyl groups is less than 1:1.

10. Process according to any of the preceding claims, **characterized in that**
- the polyether carbonate containing alkoxysilyl groups,
- the polyether carbonate polyol containing alkoxysilyl groups,
- a mixture of polyether carbonate containing alkoxysilyl groups and polyether carbonate polyol containing alkoxysilyl groups or
- the polyurethane polymer containing alkoxysilyl groups
is crosslinked, especially by addition of water.

11. Polyether carbonate containing alkoxysilyl groups or polyether carbonate polyol containing alkoxysilyl groups, obtainable by a process according to any of Claims 1 to 8.

12. Polyurethane polymer containing alkoxysilyl groups, obtainable by a process according to Claim 9.

13. Crosslinked polymer containing siloxane groups, obtainable by a process according to Claim 10.

14. Use of a polyether carbonate containing alkoxysilyl groups or of a polyether carbonate polyol containing alkoxysilyl groups according to Claim 11 as adhesion promoter, filler-activator or in adhesives and sealants, wherein the adhesion promoter, the filler-activator and the adhesive and sealant especially comprises silica fillers.

15. Use of a polyurethane polymer containing alkoxysilyl groups according to Claim 12 as adhesion promoter, filler-activator or in adhesives and sealants, wherein the adhesion promoter, the filler-activator and the adhesive and sealant especially comprises silica fillers.

16. Use of a crosslinked polymer containing siloxane groups according to Claim 13 as coating composition, foam, sealing compound, thermoplastic polymer, thermoset polymer or elastomer, wherein the coating composition, foam, sealing compound, thermoplastic polymer, thermoset polymer or elastomer especially comprises silica fillers.

17. Shaped body comprising or consisting of a crosslinked polymer containing siloxane groups according to Claim 13.

## Revendications

1. Procédé de fabrication de polyéther-carbonates contenant des groupes alcoxysilyle, **caractérisé en ce que**
(a) un polyéther-carbonate-polyol insaturé est mis en réaction avec
(b) un composé d'alcoxysilane de formule (II)
Si (X)ₘ(R1)ₙ(R2)ₒ (II)
dans laquelle
X = H, Y-S-H et Y = alkylène en C1-C22, arylène en C6-C14, aralkylène en C7-C14, alkylarylène en C7-C14 ; R1 = alcoxy en C1-C8, aralkoxy en C7-C20, aroxy en C6-C14, alkylaroxy en C7-C20 ;
R2 = alkyle en C1-C22, aryle en C6-C14, aralkyle en C7-C14, alkylaryle en C7-C14 et
m et n représentent indépendamment l'un de l'autre un nombre entier ≥ 1,
o représente zéro ou un nombre entier ≥ 1, et
m + n + o = 4.

2. Procédé selon la revendication 1, **caractérisé en ce que** la fabrication du polyéther-carbonate-polyol insaturé a lieu tout d'abord par chargement d'un composé de départ à fonction H et d'un catalyseur, puis mise en réaction avec du dioxyde de carbone, au moins un oxyde d'alkylène et au moins un comonomère insaturé choisi dans le groupe constitué par les oxydes d'alkylène insaturés et les anhydrides cycliques insaturés d'acides organiques.

3. Procédé selon la revendication 2, **caractérisé en ce que** le catalyseur est un catalyseur de cyanure de deux métaux.

4. Procédé selon la revendication 2 ou 3, **caractérisé en ce que** la proportion de comonomères insaturés lors de fabrication du polyéther-carbonate-polyol insaturé est de 0,1 à 50 % en moles, par rapport à la quantité de matière totale de dioxyde de carbone, d'oxyde d'alkylène et de comonomères.

5. Procédé selon l'une quelconque des revendications précédentes, **caractérisé en ce que** m = 1.

6. Procédé selon l'une quelconque des revendications précédentes, **caractérisé en ce que**, lors de la mise en réaction du polyéther-carbonate-polyol insaturé avec le composé d'alcoxysilane de formule (II) dans laquelle X = Y-S-H, un composé choisi dans le groupe constitué par les photoinitiateurs, les peroxydes, les composés azo, les peroxydes activés par des métaux et/ou les initiateurs redox est ajouté.

7. Procédé selon l'une quelconque des revendications 1 à 5, **caractérisé en ce que**, lors de la mise en réaction du polyéther-carbonate-polyol insaturé avec le composé d'alcoxysilane de formule (II) dans laquelle X = H, un catalyseur d'hydrosilylation du groupe constitué par les catalyseurs de Karstedt ou Speier, le platine élémentaire, le platine élémentaire sur un support en charbon actif ou en oxyde d'aluminium ou les mélanges de ceux-ci est ajouté.

8. Procédé selon l'une quelconque des revendications précédentes, **caractérisé en ce que** les groupes OH du polyéther-carbonate-polyol insaturé sont mis en réaction avant la réaction du polyéther-carbonate-polyol insaturé avec le composé d'alcoxysilane de formule (II) avec un réactif de protection avec introduction de groupes protecteurs, le réactif de protection étant notamment choisi dans le groupe comprenant le tétrafluoroborate de triméthyloxonium, le mésylate de méthyle, le tosylate de méthyle, le sulfate de diméthyle, le triflate de méthyle, le diazométhane, l'anhydride de l'acide acétique, l'anhydride de chloroacétyle, l'anhydride de trifluoroacétyle, le *N,O*bis(triméthylsilyl)acétamide, l'hexaméthyldisilazane en mélange équimolaire avec du chlorotriméthylsilane ou avec du chlorotriméthylsilane en excès molaire, le chlorotriméthylsilane, le triflate de triméthylsilyle, le chlorure de trityle, le chlorure d'o-nitrobenzyle, le chlorure de tosyle, le chlorure de mésyle, le tétrahydropyrane et l'isobutène, le groupe protecteur étant éventuellement éliminé en partie ou en totalité après la réaction du polyéther-carbonate-polyol insaturé avec le composé d'alcoxysilane de formule (II), et un polyéther-carbonate-polyol contenant des groupes alcoxysilyle étant obtenu.

9. Procédé de fabrication d'un polymère de polyuréthane contenant des groupes alcoxysilyle, **caractérisé en ce qu'**un polyéther-carbonate-polyol contenant des groupes alcoxysilyle pouvant être obtenu par un procédé selon l'une quelconque des revendications 1 à 8 est mis en réaction avec un composé de polyisocyanate, la quantité de composé de polyisocyanate utilisé étant notamment choisie de telle sorte que le rapport molaire entre ses groupes isocyanate et les groupes hydroxyle du polyéther-carbonate-polyol contenant des groupes alcoxysilyle soit inférieur à 1:1.

10. Procédé selon l'une quelconque des revendications précédentes, **caractérisé en ce que**
- le polyéther-carbonate contenant des groupes alcoxysilyle,
- le polyéther-carbonate-polyol contenant des groupes alcoxysilyle,
- un mélange du polyéther-carbonate contenant des groupes alcoxysilyle et du polyéther-carbonate-polyol contenant des groupes alcoxysilyle, ou
- le polymère de polyuréthane contenant des groupes alcoxysilyle
est réticulé, notamment par ajout d'eau.

11. Polyéther-carbonate contenant des groupes alcoxysilyle ou polyéther-carbonate-polyol contenant des groupes alcoxysilyle, pouvant être obtenu par un procédé selon l'une quelconque des revendications 1 à 8.

12. Polymère de polyuréthane contenant des groupes alcoxysilyle, pouvant être obtenu par un procédé selon la revendication 9.

13. Polymère réticulé contenant des groupes siloxane, pouvant être obtenu par un procédé selon la revendication 10.

14. Utilisation d'un polyéther-carbonate contenant des groupes alcoxysilyle ou d'un polyéther-carbonate-polyol contenant des groupes alcoxysilyle selon la revendication 11 en tant que promoteur d'adhésion, activateur de charge ou dans des adhésifs et des agents d'étanchéité, le promoteur d'adhésion, l'activateur de charge et l'adhésif et l'agent d'étanchéité contenant notamment des charges contenant de la silice.

15. Utilisation d'un polymère de polyuréthane contenant des groupes alcoxysilyle selon la revendication 12 en tant que promoteur d'adhésion, activateur de charge ou dans des adhésifs et des agents d'étanchéité, le promoteur d'adhésion, l'activateur de charge et l'adhésif et l'agent d'étanchéité contenant notamment des charges contenant de la silice.

16. Utilisation d'un polymère réticulé contenant des groupes siloxane selon la revendication 13 en tant qu'agent de revêtement, mousse, matériau d'étanchéité, plastique thermoplastique, plastique duromère ou élastomère, l'agent de revêtement, la mousse, le matériau d'étanchéité, le plastique thermoplastique, le plastique duromère ou l'élastomère contenant notamment des charges contenant de la silice.

17. Corps moulé, qui contient un polymère réticulé contenant des groupes siloxane selon la revendication 13 ou en est constitué.
